(19) **Europäisches Patentamt**
**European Patent Office**
**Office européen des brevets**

(11) **EP 4 568 298 A1**

(12) **EUROPEAN PATENT APPLICATION**
published in accordance with Art. 153(4) EPC

(43) Date of publication:
**11.06.2025  Bulletin 2025/24**

(21) Application number: **23849350.6**

(22) Date of filing: **31.07.2023**

(51) International Patent Classification (IPC):
*H04W 4/02* (2018.01)

(52) Cooperative Patent Classification (CPC):
**H04W 4/02; H04W 24/08; H04W 64/00**

(86) International application number:
**PCT/CN2023/110222**

(87) International publication number:
**WO 2024/027643 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **01.08.2022  CN 202210918392**

(71) Applicant: **Datang Mobile Communications
Equipment Co., Ltd.
Beijing 100085 (CN)**

(72) Inventors:
• **REN, Xiaotao
  Beijing 100085 (CN)**
• **REN, Bin
  Beijing 100085 (CN)**

(74) Representative: **Studio Torta S.p.A.
Via Viotti, 9
10121 Torino (IT)**

(54) **INFORMATION TRANSMISSION METHOD AND APPARATUS, AND DEVICE**

(57)    An information transmission method, an information transmission apparatus and a device are provided, wherein the information transmission method includes: sending first information to a second device; wherein the first information includes: at least one of expected angle information and uncertainty range information of the expected angle information; the expected angle information is: angle information related to a sidelink departure angle and/or a sidelink arrival angle between a first terminal and a second terminal; the first device includes: at least one of the first terminal, a third terminal, a base station, a Roadside Unit (RSU) and a positioning server; the second device includes: at least one of the second terminal and a positioning calculation unit.

sending first information to a second device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit

31

**Fig. 3**

**Description**

**CROSS-REFERENCE TO RELATED APPLICATION**

The present application claims a priority to the Chinese patent application No. 202210918392.4 filed in China on August 1, 2022, a disclosure of which is incorporated herein by reference in its entirety.

**TECHNICAL FIELD**

The present disclosure relates to the field of communications technology, and in particular, to an information processing method, an information processing apparatus, and a device.

**BACKGROUND**

In prior art, a cellular network-based positioning solution includes a downlink positioning solution, an uplink positioning solution, or a downlink and uplink hybrid positioning solution. Taking the downlink positioning solution as an example, the downlink positioning solution mainly includes the Downlink Time Difference Of Arrival (DL-TDOA) positioning method based on a delay and the Downlink Angle Of Departure (DL-AoD) positioning method based on an angle. In the DL-TDOA delay positioning method, the base station sends a Downlink Positioning Reference Signal (DL-PRS), and the terminal estimates its distance relative to each base station through the received DL-PRS; a position of the terminal is estimated through the relative delay between the base stations based on the different propagation distances of the terminal relative to respective base stations. For the DL-AoD angle positioning method, the position of the terminal is determined by multiple angle parameters based on position directions of the terminal relative to the respective base stations.

In each of the above various positioning technical solutions, the base station remains stationary, and the terminal is generally either stationary or moving at a low speed. In this way, when the terminal is stationary or moving at the low speed, the change in the relative orientation between the terminal and the base station is not obvious, and the adverse impact on the positioning accuracy will not be too great. However, in a sidelink positioning, a terminal A sends a Sidelink-Positioning Reference Signal(S-PRS), and a terminal B, in order to complete a relative positioning between itself and the terminal A, receives the S-PRS sent by the terminal A to determine a relative distance between the terminal B and the terminal A. The S-PRS sent by the terminal A is often sent in a beam scanning manner, while the terminal A and the terminal B may move rapidly, and thus the relative orientation between the terminal A and the terminal B changes very quickly. The terminal B often does not know which direction of an S-PRS beam should be received, leading to failures in measuring the S-PRS or reduced measurement accuracy due to the inability to locate the strongest S-PRS signal.

Thus, in the related art, it cannot solve problems such as how a receiver cannot accurately receive the S-PRS.

**SUMMARY**

An object of the present disclosure is to provide an information transmission method, an information transmission apparatus and device to solve a problem in the related art that a receiver cannot accurately receive a Sidelink-Positioning Reference Signal(S-PRS).

In order to solve the above technical problem, the present disclosure provides in some embodiments an information transmission method, applied to a first device, including:

sending first information to a second device;
wherein the first information includes: at least one of expected angle information or uncertainty range information of the expected angle information;
the expected angle information is angle information related to a sidelink departure angle and/or a sidelink arrival angle between a first terminal and a second terminal;
the first device includes: at least one of the first terminal, a third terminal, a base station, a Roadside Unit (RSU) or a positioning server;
the second device includes: at least one of the second terminal or a positioning calculation unit.

In some embodiments, the expected angle information includes at least one of the followings:

an expected Sidelink Azimuth angle of Departure (SL-AoD);
an expected Sidelink Zenith angle of Departure (SL-ZoD);
an expected Sidelink Azimuth angle of Arrival (SL-AoA); or
an expected Sidelink Zenith angle of Arrival (SL-ZoA).

In some embodiments, the expected SL-AoD is an expected value of the departure azimuth angle of the S-PRS; and/or

the expected SL-ZoD is an expected value of the departure vertical angle of the S-PRS; and/or

the expected SL-AoA is an expected value of the arrival azimuth angle of the S-PRS; and/or

the expected SL-ZoA is an expected value of the arrival vertical angle of the S-PRS.

In some embodiments, the SL-AoD and the SL-AoA are represented as: azimuth angle information defined in a Global Coordinate System (GCS); or, azimuth angle information defined in a Local Coordinate System (LCS); and/or
the SL-ZoD and the SL-ZoA are represented as: vertical angle information defined in the GCS; or, vertical angle information defined in the LCS.

In some embodiments, the SL-ZoD is represented as an angle between a first departure angle and a Z axis of a first coordinate system; the SL-ZoA is represented as the angle between a first arrival angle and the Z axis of the first coordinate system; and/or

the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;
wherein the first coordinate system is the GCS or the LCS;
the first departure angle is the expected sidelink departure angle between the first terminal and the second terminal;
the first arrival angle is the expected sidelink arrival angle between the first terminal and the second terminal;
the X axis in the GCS points toward a geographic north direction and the Z axis points toward a zenith direction.

In some embodiments, an uncertainty range of the expected SL-AoD represents a value range of the expected SL-AoD; and/or

an uncertainty range of the expected SL-ZoD represents a value range of the expected SL-ZoD; and/or
an uncertainty range of the expected SL-AoA represents a value range of the expected SL-AoA; and/or
an uncertainty range of the expected SL-ZoA represents a value range of the expected SL-ZoA.

In some embodiments, an angle range of the sidelink departure angle or the sidelink arrival angle represented by the expected angle information and the uncertainty range information is as follows:

$$[A-B/2, A+B/2];$$

wherein A represents an angle corresponding to the expected angle information; B represents an angle corresponding to the uncertainty range information.
In some embodiments, before sending the first information to the second device, the method further includes:

determining the first information using a first mode; wherein the first mode includes at least one of the followings:
performing processing based on zone IDs of the first terminal and the second terminal;
measuring a sidelink signal or channel;
performing processing based on historical location information of the first terminal and the second terminal; or
performing processing based on relative angle information between the first terminal and the second terminal obtained by ranging.

In some embodiments, the performing the processing based on the zone IDs of the first terminal and the second terminal includes:

receiving Physical Sidelink Control Channel (PSCCH) information sent by the second terminal;
obtaining the zone ID of the second terminal based on the PSCCH information;
determining the zone ID of the first terminal;
performing processing based on the zone IDs of the first terminal and the second terminal.

In some embodiments, the measuring a sidelink signal or channel includes at least one of the followings:

measuring a Sidelink Synchronization Signal Block (S-SSB) sent by the second terminal;
measuring a Physical Sidelink Shared Channel (PSSCH) sent by the second terminal; or
measuring a Physical Sidelink Control Channel (PSCCH) sent by the second terminal.

In some embodiments, the first information further includes at least one of the followings:

first indication information, which is used to indicate an object generating the angle information; or
second indication information, which is used to indicate a type of the angle information.

In some embodiments, the object includes: the first terminal, the third terminal, the base station, the RSU or the positioning server; and/or
the type includes: angle information in a Global Coordinate System (GCS), or angle information in a Local Coordinate System (LCS).
In some embodiments, in the case that the type is the angle information in the LCS, the second indication information is further used to indicate conversion relationship information from the LCS to the GCS.
In some embodiments, the first information further includes at least one of the followings:

measurement confidence of the angle information; measurement quality indication information of the angle information;

a resolution of the angle information; or

a mode for sending the angle information.

In some embodiments, the measurement confidence refers to: the probability that an error value of the angle measurement corresponding to the angle information is in a confidence interval; the two endpoint values of the confidence interval are configured by the first device; and/or

the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or

the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or

the sending mode includes: at least one of sending occasion or a sending path; the sending occasion includes: at least one of periodic sending occasion or event-triggered sending occasion; and/or, the sending path includes: at least one of sending through an LTE Positioning Protocol Lightweight Presentation Protocol (LPP) signaling, sending through a PC5-RRC (sidelink Radio Resource Control) signaling, or sending through an RRC (Radio Resource Control) signaling.

The present disclosure further provides in some embodiments an information transmission method, applied to a second device, including:

receiving first information sent by a first device; wherein the first information includes: at least one of expected angle information or uncertainty range information of the expected angle information;

the expected angle information is angle information related to a sidelink departure angle and/or a sidelink arrival angle between a first terminal and a second terminal;

the first device includes: at least one of the first terminal, a third terminal, a base station, a Roadside Unit (RSU) or a positioning server;

the second device includes: at least one of the second terminal or a positioning calculation unit.

In some embodiments, the expected angle information includes at least one of the followings:

an expected Sidelink Azimuth angle of Departure (SL-AoD);

an expected Sidelink Zenith angle of Departure (SL-ZoD);

an expected Sidelink Azimuth angle of Arrival (SL-AoA); or

an expected Sidelink Zenith angle of Arrival (SL-ZoA).

In some embodiments, the expected SL-AoD is an expected value of the departure azimuth angle of the S-PRS; and/or

the expected SL-ZoD is an expected value of the departure vertical angle of the S-PRS; and/or

the expected SL-AoA is an expected value of the arrival azimuth angle of the S-PRS; and/or

the expected SL-ZoA is an expected value of the arrival vertical angle of the S-PRS.

In some embodiments, the SL-AoD and the SL-AoA are represented as: azimuth angle information defined in a Global Coordinate System (GCS); or, azimuth angle information defined in a Local Coordinate System (LCS); and/or

the SL-ZoD and the SL-ZoA are represented as: vertical angle information defined in the GCS; or, vertical angle information defined in the LCS.

In some embodiments, the SL-ZoD is represented as an angle between a first departure angle and a Z axis of a first coordinate system; the SL-ZoA is represented as the angle between a first arrival angle and the Z axis of the first coordinate system; and/or

the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;

wherein the first coordinate system is the GCS or the LCS;

the first departure angle is the expected sidelink departure angle between the first terminal and the second terminal;

the first arrival angle is the expected sidelink arrival angle between the first terminal and the second terminal;

the X axis in the GCS points toward a geographic north direction and the Z axis points toward a zenith direction.

In some embodiments, an uncertainty range of the expected SL-AoD represents a value range of the expected SL-AoD; and/or

an uncertainty range of the expected SL-ZoD represents a value range of the expected SL-ZoD; and/or
an uncertainty range of the expected SL-AoA represents a value range of the expected SL-AoA; and/or
an uncertainty range of the expected SL-ZoA represents a value range of the expected SL-ZoA.

In some embodiments, an angle range of the sidelink departure angle or the sidelink arrival angle represented by the expected angle information and the uncertainty range information is as follows:

$$[A-B/2, A+B/2];$$

wherein A represents an angle corresponding to the expected angle information; B represents an angle corresponding to the uncertainty range information.

In some embodiments, the first information is determined by the first device using a first mode; wherein the first mode includes at least one of the followings:

performing processing based on zone IDs of the first terminal and the second terminal;
measuring a sidelink signal or channel;
performing processing based on historical location information of the first terminal and the second terminal; or
performing processing based on relative angle information between the first terminal and the second terminal obtained by ranging.

In some embodiments, in the case that the first mode includes the performing the processing based on the zone IDs of the first terminal and the second terminal, before receiving the first device, the method further includes:
sending Physical Sidelink Control Channel (PSCCH) information to the first device, wherein the PSCCH information carries the zone ID of the second terminal.

In some embodiments, the measuring a sidelink signal or channel includes at least one of the followings:

measuring a Sidelink Synchronization Signal Block (S-SSB) sent by the second terminal;
measuring a Physical Sidelink Shared Channel (PSSCH) sent by the second terminal; or
measuring a Physical Sidelink Control Channel (PSCCH) sent by the second terminal.

In some embodiments, the first information further includes at least one of the followings:

first indication information, which is used to indicate an object generating the angle information; or
second indication information, which is used to indicate a type of the angle information.

In some embodiments, the object includes: the first terminal, the third terminal, the base station, the RSU or the positioning server; and/or
the type includes: angle information in a Global Coordinate System (GCS), or angle information in a Local Coordinate System (LCS).

In some embodiments, in the case that the type is the angle information in the LCS, the second indication information is further used to indicate conversion relationship information from the LCS to the GCS.

In some embodiments, the first information further includes at least one of the followings:

measurement confidence of the angle information;
measurement quality indication information of the angle information;
a resolution of the angle information; or
a mode for sending the angle information.

In some embodiments, the measurement confidence refers to: the probability that an error value of the angle measurement corresponding to the angle information is in a confidence interval; the two endpoint values of the confidence interval are configured by the first device; and/or

the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or
the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or
the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

In some embodiments, after receiving the first information sent by the first device, the method further includes:
determining the location information of the second terminal based on the first information.

The present disclosure further provides in some embodiments an information transmission device, the information transmission device is a first device, and includes a memory, a transceiver, and a processor;
wherein the memory is configured to store a computer program; the transceiver is configured to send and receive data under the control of the processor; the processor is configured to read the computer program in the memory and perform the following operations:

> sending first information to a second device through the transceiver;
> wherein the first information includes: at least one of expected angle information or uncertainty range information of the expected angle information;
> the expected angle information is: angle information related to a sidelink departure angle and/or a sidelink arrival angle between a first terminal and a second terminal;
> the first device includes: at least one of the first terminal, a third terminal, a base station, a Roadside Unit (RSU) or a positioning server;
> the second device includes: at least one of the second terminal or a positioning calculation unit.

In some embodiments, the expected angle information includes at least one of the followings:

> an expected Sidelink Azimuth angle of Departure (SL-AoD);
> an expected Sidelink Zenith angle of Departure (SL-ZoD);
> an expected Sidelink Azimuth angle of Arrival (SL-AoA); or
> an expected Sidelink Zenith angle of Arrival (SL-ZoA).

In some embodiments, the expected SL-AoD is an expected value of the departure azimuth angle of the S-PRS; and/or

> the expected SL-ZoD is an expected value of the departure vertical angle of the S-PRS; and/or
> the expected SL-AoA is an expected value of the arrival azimuth angle of the S-PRS; and/or
> the expected SL-ZoA is an expected value of the arrival vertical angle of the S-PRS.

In some embodiments, the SL-AoD and the SL-AoA are represented as: azimuth angle information defined in a Global Coordinate System (GCS); or, azimuth angle information defined in a Local Coordinate System (LCS); and/or
the SL-ZoD and the SL-ZoA are represented as: vertical angle information defined in the GCS; or, vertical angle information defined in the LCS.

In some embodiments, the SL-ZoD is represented as an angle between a first departure angle and a Z axis of a first coordinate system; the SL-ZoA is represented as the angle between a first arrival angle and the Z axis of the first coordinate system; and/or

> the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;
> wherein the first coordinate system is the GCS or the LCS;
> the first departure angle is: the expected sidelink departure angle between the first terminal and the second terminal;
> the first arrival angle is: the expected sidelink arrival angle between the first terminal and the second terminal;
> the X axis in the GCS points toward a geographic north direction and the Z axis points toward a zenith direction.

In some embodiments, an uncertainty range of the expected SL-AoD represents a value range of the expected SL-AoD; and/or

> an uncertainty range of the expected SL-ZoD represents a value range of the expected SL-ZoD; and/or
> an uncertainty range of the expected SL-AoA represents a value range of the expected SL-AoA; and/or
> an uncertainty range of the expected SL-ZoA represents a value range of the expected SL-ZoA.

In some embodiments, an angle range of the sidelink departure angle or the sidelink arrival angle represented by the expected angle information and the uncertainty range information is as follows:

$$[A-B/2,\ A+B/2];$$

wherein A represents an angle corresponding to the expected angle information; B represents an angle corresponding to the uncertainty range information.

In some embodiments, the operation further includes:

before sending the first information to the second device, determining the first information using a first mode;

wherein the first mode includes at least one of the followings:

performing processing based on zone IDs of the first terminal and the second terminal;
measuring a sidelink signal or channel;
performing processing based on historical location information of the first terminal and the second terminal; or
performing processing based on relative angle information between the first terminal and the second terminal obtained by ranging.

In some embodiments, the performing the processing based on the zone IDs of the first terminal and the second terminal includes:

receiving Physical Sidelink Control Channel (PSCCH) information sent by the second terminal;
obtaining the zone ID of the second terminal based on the PSCCH information;
determining the zone ID of the first terminal;
performing processing based on the zone IDs of the first terminal and the second terminal.

In some embodiments, the measuring a sidelink signal or channel includes at least one of the followings:

measuring a Sidelink Synchronization Signal Block (S-SSB) sent by the second terminal;
measuring a Physical Sidelink Shared Channel (PSSCH) sent by the second terminal; or
measuring a Physical Sidelink Control Channel (PSCCH) sent by the second terminal.

In some embodiments, the first information further includes at least one of the followings:

first indication information, which is used to indicate an object generating the angle information; or
second indication information, which is used to indicate a type of the angle information.

In some embodiments, the object includes: the first terminal, the third terminal, the base station, the RSU or the positioning server; and/or
the type includes: angle information in a Global Coordinate System (GCS), or angle information in a Local Coordinate System (LCS).

In some embodiments, in the case that the type is the angle information in the LCS, the second indication information is further used to indicate conversion relationship information from the LCS to the GCS.

In some embodiments, the first information further includes at least one of the followings:

measurement confidence of the angle information;
measurement quality indication information of the angle information;
a resolution of the angle information; or
a mode for sending the angle information.

In some embodiments, the measurement confidence refers to: the probability that an error value of the angle measurement corresponding to the angle information is in a confidence interval; the two endpoint values of the confidence interval are configured by the first device; and/or

the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or
the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or
the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

The present disclosure further provides in some embodiments an information transmission device, the information transmission device is a second device, and includes a memory, a transceiver, and a processor; wherein the memory is configured to store a computer program; the transceiver is configured to send and receive data under the control of the processor; the processor is configured to read the computer program in the memory and perform the following operations:

receiving, through the transceiver, first information sent by a first device;
wherein the first information includes: at least one of expected angle information or uncertainty range information of the expected angle information;
the expected angle information is angle information related to a sidelink departure angle and/or a sidelink arrival angle between a first terminal and a second terminal;

the first device includes: at least one of the first terminal, a third terminal, a base station, a Roadside Unit (RSU) or a positioning server;
the second device includes: at least one of the second terminal or a positioning calculation unit.

In some embodiments, the expected angle information includes at least one of the followings:

an expected Sidelink Azimuth angle of Departure (SL-AoD);
an expected Sidelink Zenith angle of Departure (SL-ZoD);
an expected Sidelink Azimuth angle of Arrival (SL-AoA); or
an expected Sidelink Zenith angle of Arrival (SL-ZoA).

In some embodiments, the expected SL-AoD is an expected value of the departure azimuth angle of the S-PRS; and/or

the expected SL-ZoD is an expected value of the departure vertical angle of the S-PRS; and/or

the expected SL-AoA is an expected value of the arrival azimuth angle of the S-PRS; and/or

the expected SL-ZoA is an expected value of the arrival vertical angle of the S-PRS.

In some embodiments, the SL-AoD and the SL-AoA are represented as: azimuth angle information defined in a Global Coordinate System (GCS); or, azimuth angle information defined in a Local Coordinate System (LCS); and/or
the SL-ZoD and the SL-ZoA are represented as: vertical angle information defined in the GCS; or, vertical angle information defined in the LCS.
In some embodiments, the SL-ZoD is represented as an angle between a first departure angle and a Z axis of a first coordinate system; the SL-ZoA is represented as the angle between a first arrival angle and the Z axis of the first coordinate system; and/or

the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;
wherein the first coordinate system is the GCS or the LCS;
the first departure angle is: the expected sidelink departure angle between the first terminal and the second terminal;
the first arrival angle is: the expected sidelink arrival angle between the first terminal and the second terminal;
the X axis in the GCS points toward a geographic north direction and the Z axis points toward a zenith direction.

In some embodiments, an uncertainty range of the expected SL-AoD represents a value range of the expected SL-AoD; and/or

an uncertainty range of the expected SL-ZoD represents a value range of the expected SL-ZoD; and/or
an uncertainty range of the expected SL-AoA represents a value range of the expected SL-AoA; and/or
an uncertainty range of the expected SL-ZoA represents a value range of the expected SL-ZoA.

In some embodiments, an angle range of the sidelink departure angle or the sidelink arrival angle represented by the expected angle information and the uncertainty range information is as follows:

$$[A-B/2, A+B/2];$$

wherein A represents an angle corresponding to the expected angle information; B represents an angle corresponding to the uncertainty range information.
In some embodiments, the first information is determined by the first device using a first mode;
wherein the first mode includes at least one of the followings:

performing processing based on zone IDs of the first terminal and the second terminal;
measuring a sidelink signal or channel;
performing processing based on historical location information of the first terminal and the second terminal; or
performing processing based on relative angle information between the first terminal and the second terminal obtained by ranging.

In some embodiments, the operation further includes:
in the case that the first mode includes the performing the processing based on the zone IDs of the first terminal and the second terminal, before receiving the first device, sending Physical Sidelink Control Channel (PSCCH) information to the first device through the transceiver, wherein the PSCCH information carries the zone ID of the second terminal.
In some embodiments, the measuring a sidelink signal or channel includes at least one of the followings:

measuring a Sidelink Synchronization Signal Block (S-SSB) sent by the second terminal;
measuring a Physical Sidelink Shared Channel (PSSCH) sent by the second terminal; or
measuring a Physical Sidelink Control Channel (PSCCH) sent by the second terminal.

In some embodiments, the first information further includes at least one of the followings:

first indication information, which is used to indicate an object generating the angle information; or
second indication information, which is used to indicate a type of the angle information.

In some embodiments, the object includes: the first terminal, the third terminal, the base station, the RSU or the positioning server; and/or
the type includes: angle information in a Global Coordinate System (GCS), or angle information in a Local Coordinate System (LCS).

In some embodiments, in the case that the type is the angle information in the LCS, the second indication information is further used to indicate conversion relationship information from the LCS to the GCS.

In some embodiments, the first information further includes at least one of the followings:

measurement confidence of the angle information;
measurement quality indication information of the angle information;
a resolution of the angle information; or
a mode for sending the angle information.

In some embodiments, the measurement confidence refers to: the probability that an error value of the angle measurement corresponding to the angle information is in a confidence interval; the two endpoint values of the confidence interval are configured by the first device; and/or

the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or
the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or
the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

In some embodiments, the operation further includes:
after receiving the first information sent by the first device, determining the location information of the second terminal based on the first information.

The present disclosure further provides an information transmission apparatus, applied to a first device, including:

a first sending unit, configured to send first information to a second device;
wherein the first information includes: at least one of expected angle information or uncertainty range information of the expected angle information;
the expected angle information is: angle information related to a sidelink departure angle and/or a sidelink arrival angle between a first terminal and a second terminal;
the first device includes: at least one of the first terminal, a third terminal, a base station, a Roadside Unit (RSU) or a positioning server;
the second device includes: at least one of the second terminal or a positioning calculation unit.

In some embodiments, the expected angle information includes at least one of the followings:

an expected Sidelink Azimuth angle of Departure (SL-AoD);
an expected Sidelink Zenith angle of Departure (SL-ZoD);
an expected Sidelink Azimuth angle of Arrival (SL-AoA); or
an expected Sidelink Zenith angle of Arrival (SL-ZoA).

In some embodiments, the expected SL-AoD is an expected value of the departure azimuth angle of the S-PRS; and/or

the expected SL-ZoD is an expected value of the departure vertical angle of the S-PRS; and/or

the expected SL-AoA is an expected value of the arrival azimuth angle of the S-PRS; and/or

the expected SL-ZoA is an expected value of the arrival vertical angle of the S-PRS.

In some embodiments, the SL-AoD and the SL-AoA are represented as: azimuth angle information defined in a Global Coordinate System (GCS); or, azimuth angle information defined in a Local Coordinate System (LCS); and/or
the SL-ZoD and the SL-ZoA are represented as: vertical angle information defined in the GCS; or, vertical angle information defined in the LCS.

In some embodiments, the SL-ZoD is represented as an angle between a first departure angle and a Z axis of a first coordinate system; the SL-ZoA is represented as the angle between a first arrival angle and the Z axis of the first coordinate system; and/or

the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;
wherein the first coordinate system is the GCS or the LCS;
the first departure angle is the expected sidelink departure angle between the first terminal and the second terminal;
the first arrival angle is the expected sidelink arrival angle between the first terminal and the second terminal;
the X axis in the GCS points toward a geographic north direction and the Z axis points toward a zenith direction.

In some embodiments, an uncertainty range of the expected SL-AoD represents a value range of the expected SL-AoD; and/or

an uncertainty range of the expected SL-ZoD represents a value range of the expected SL-ZoD; and/or
an uncertainty range of the expected SL-AoA represents a value range of the expected SL-AoA; and/or
an uncertainty range of the expected SL-ZoA represents a value range of the expected SL-ZoA.

In some embodiments, an angle range of the sidelink departure angle or the sidelink arrival angle represented by the expected angle information and the uncertainty range information is as follows:

$$[A-B/2, A+B/2];$$

wherein A represents an angle corresponding to the expected angle information; B represents an angle corresponding to the uncertainty range information.

In some embodiments, the apparatus further includes:

a first determination unit, configured to determine the first information using a first mode before sending the first information to the second device;
wherein the first mode includes at least one of the followings:

performing processing based on zone IDs of the first terminal and the second terminal;
measuring a sidelink signal or channel;
performing processing based on historical location information of the first terminal and the second terminal; or
performing processing based on relative angle information between the first terminal and the second terminal obtained by ranging.

In some embodiments, the performing the processing based on the zone IDs of the first terminal and the second terminal includes:

receiving Physical Sidelink Control Channel (PSCCH) information sent by the second terminal;
obtaining the zone ID of the second terminal based on the PSCCH information;
determining the zone ID of the first terminal;
performing processing based on the zone IDs of the first terminal and the second terminal.

In some embodiments, the measuring a sidelink signal or channel includes at least one of the followings:

measuring a Sidelink Synchronization Signal Block (S-SSB) sent by the second terminal;
measuring a Physical Sidelink Shared Channel (PSSCH) sent by the second terminal; or
measuring a Physical Sidelink Control Channel (PSCCH) sent by the second terminal.

In some embodiments, the first information further includes at least one of the followings:

first indication information, which is used to indicate an object generating the angle information; or
second indication information, which is used to indicate a type of the angle information.

In some embodiments, the object includes: the first terminal, the third terminal, the base station, the RSU or the positioning server; and/or
the type includes: angle information in a Global Coordinate System (GCS), or angle information in a Local Coordinate System (LCS).

In some embodiments, in the case that the type is the angle information in the LCS, the second indication information is further used to indicate conversion relationship information from the LCS to the GCS.

In some embodiments, the first information further includes at least one of the followings:

> measurement confidence of the angle information;
> measurement quality indication information of the angle information;
> a resolution of the angle information; or
> a mode for sending the angle information.

In some embodiments, the measurement confidence refers to: the probability that an error value of the angle measurement corresponding to the angle information is in a confidence interval; the two endpoint values of the confidence interval are configured by the first device; and/or

> the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or
> the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or
> the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

The present disclosure further provides in some embodiments an information transmission apparatus, applied to a second device, including:

> a first receiving unit, configured to receive first information sent by a first device;
> wherein the first information includes: at least one of expected angle information or uncertainty range information of the expected angle information;
> the expected angle information is angle information related to a sidelink departure angle and/or a sidelink arrival angle between a first terminal and a second terminal;
> the first device includes: at least one of the first terminal, a third terminal, a base station, a Roadside Unit (RSU) or a positioning server;
the second device includes: at least one of the second terminal or a positioning calculation unit.

In some embodiments, the expected angle information includes at least one of the followings:

> an expected Sidelink Azimuth angle of Departure (SL-AoD);
> an expected Sidelink Zenith angle of Departure (SL-ZoD);
> an expected Sidelink Azimuth angle of Arrival (SL-AoA); or
> an expected Sidelink Zenith angle of Arrival (SL-ZoA).

In some embodiments, the expected SL-AoD is an expected value of the departure azimuth angle of the S-PRS; and/or

> the expected SL-ZoD is an expected value of the departure vertical angle of the S-PRS; and/or

> the expected SL-AoA is an expected value of the arrival azimuth angle of the S-PRS; and/or

> the expected SL-ZoA is an expected value of the arrival vertical angle of the S-PRS.

In some embodiments, the SL-AoD and the SL-AoA are represented as: azimuth angle information defined in a Global Coordinate System (GCS); or, azimuth angle information defined in a Local Coordinate System (LCS); and/or
the SL-ZoD and the SL-ZoA are represented as: vertical angle information defined in the GCS; or, vertical angle information defined in the LCS.

In some embodiments, the SL-ZoD is represented as an angle between a first departure angle and a Z axis of a first coordinate system; the SL-ZoA is represented as the angle between a first arrival angle and the Z axis of the first coordinate system; and/or

> the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;
> wherein the first coordinate system is the GCS or the LCS;
> the first departure angle is the expected sidelink departure angle between the first terminal and the second terminal;

the first arrival angle is the expected sidelink arrival angle between the first terminal and the second terminal;

the X axis in the GCS points toward a geographic north direction and the Z axis points toward a zenith direction.

In some embodiments, an uncertainty range of the expected SL-AoD represents a value range of the expected SL-AoD; and/or

an uncertainty range of the expected SL-ZoD represents a value range of the expected SL-ZoD; and/or
an uncertainty range of the expected SL-AoA represents a value range of the expected SL-AoA; and/or
an uncertainty range of the expected SL-ZoA represents a value range of the expected SL-ZoA.

In some embodiments, an angle range of the sidelink departure angle or the sidelink arrival angle represented by the expected angle information and the uncertainty range information is as follows:

$$[A-B/2, A+B/2];$$

wherein A represents an angle corresponding to the expected angle information; B represents an angle corresponding to the uncertainty range information.

In some embodiments, the first information is determined by the first device using a first mode;

wherein the first mode includes at least one of the followings:
performing processing based on zone IDs of the first terminal and the second terminal;
measuring a sidelink signal or channel;
performing processing based on historical location information of the first terminal and the second terminal; or
performing processing based on relative angle information between the first terminal and the second terminal obtained by ranging.

In some embodiments, the apparatus further includes:
a second sending unit, configured to send Physical Sidelink Control Channel (PSCCH) information to the first device before receiving the first device in the case that the first mode includes the performing the processing based on the zone IDs of the first terminal and the second terminal; wherein the PSCCH information carries the zone ID of the second terminal.

In some embodiments, the measuring a sidelink signal or channel includes at least one of the followings:

measuring a Sidelink Synchronization Signal Block (S-SSB) sent by the second terminal;
measuring a Physical Sidelink Shared Channel (PSSCH) sent by the second terminal; or
measuring a Physical Sidelink Control Channel (PSCCH) sent by the second terminal.

In some embodiments, the first information further includes at least one of the followings:

first indication information, which is used to indicate an object generating the angle information; or
second indication information, which is used to indicate a type of the angle information.

In some embodiments, the object includes: the first terminal, the third terminal, the base station, the RSU or the positioning server; and/or

the type includes: angle information in a Global Coordinate System (GCS), or angle information in a Local Coordinate System (LCS).
In some embodiments, in the case that the type is the angle information in the LCS, the second indication information is further used to indicate conversion relationship information from the LCS to the GCS.

In some embodiments, the first information further includes at least one of the followings:

measurement confidence of the angle information;
measurement quality indication information of the angle information;
a resolution of the angle information; or
a mode for sending the angle information.

In some embodiments, the measurement confidence refers to: the probability that an error value of the angle measurement corresponding to the angle information is in a confidence interval; the two endpoint values of the confidence interval are configured by the first device; and/or

the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or
the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

In some embodiments, the apparatus further includes:

a second determination unit, configured to determine the location information of the second terminal based on the first information after receiving the first information sent by the first device.

The present disclosure further provides in some embodiments a processor-readable storage medium. The processor-readable storage medium stores a computer program. The computer program is used to cause the processor to execute the above-mentioned information transmission method.

Beneficial effects of the technical solutions of the present disclosure are as follows:

in the above solutions, the information transmission method includes sending first information to a second device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit. Accordingly, it enables assisting the second device in determining the approximate angle range for searching the S-PRS, thereby assisting to improve a reception success rate of the S-PRS, avoiding a positioning deviation caused by failure to receive the S-PRS, and thus improving the positioning accuracy. It effectively solves the problem in the related art that a receiver cannot accurately receive the S-PRS.

## BRIEF DESCRIPTION OF THE DRAWINGS

Fig. 1 is a schematic diagram of the wireless communication system architecture according to an embodiment of the present disclosure;
Fig. 2 is a schematic diagram of the DL-TDOA and DL-AoD positioning methods according to an embodiment of the present disclosure;
Fig. 3 is a flow chart of the information transmission method according to an embodiment of the present disclosure;
Fig. 4 is another a flow chart of the information transmission method according to an embodiment of the present disclosure;
Fig. 5 is a schematic diagram of the first angle information according to an embodiment of the present disclosure;
Fig. 6 is a schematic diagram of determining the first angle information based on the zone ID according to an embodiment of the present disclosure;
Fig. 7 is a schematic diagram of sending the first angle information according to an embodiment of the present disclosure;
Fig. 8 is a schematic diagram of the definition mode 1 of the first angle information according to an embodiment of the present disclosure;
Fig. 9 is a schematic diagram of the definition mode 2 of the first angle information according to an embodiment of the present disclosure;
Fig. 10 is a structural schematic diagram of the first device according to an embodiment of the present disclosure;
Fig. 11 is a structural schematic diagram of the second device according to an embodiment of the present disclosure;
Fig. 12 is a structural schematic diagram of the information transmission apparatus according to an embodiment of the present disclosure;
Fig. 13 is another structural schematic diagram of the information transmission apparatus according to an embodiment of the present disclosure.

## DETAILED DESCRIPTION

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without making creative efforts fall within the scope of the present disclosure.

In the embodiments of the present disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of the present disclosure, the term "plurality" refers to two or more than two, and other quantifiers are similar to it.

The technical solutions provided by the embodiments of the present disclosure can be applied to a variety of systems, especially the 5G system. For example, the applicable system may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can further include a core network part, such as the evolved packet system (EPS), and 5G System (5GS), etc.

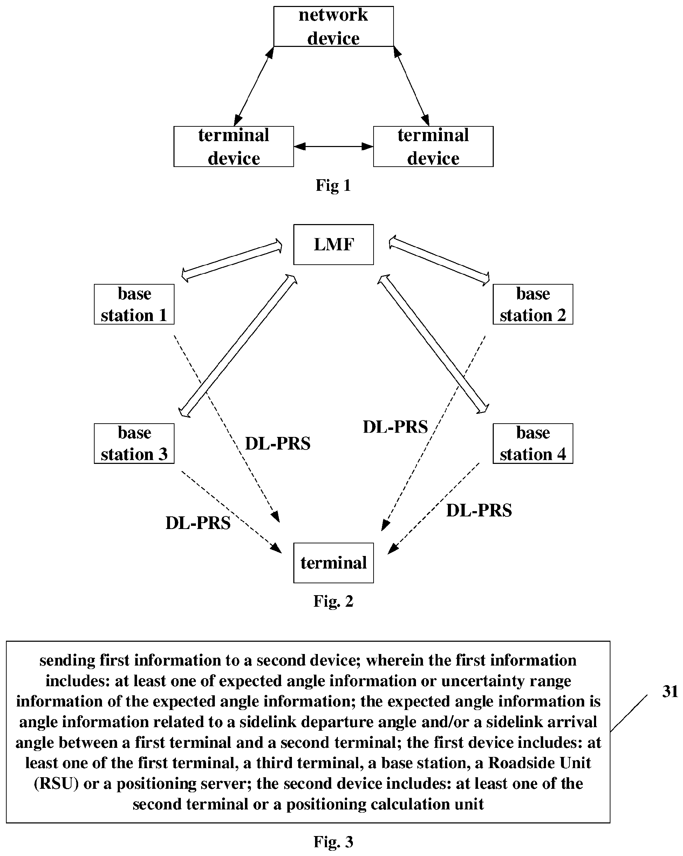

Fig. 1 shows a block diagram of a wireless communication system to which the embodiments of the present disclosure can be applied. The wireless communication system includes a terminal device (also referred to as a terminal) and a network device.

The terminal device involved in the embodiments of the present disclosure may be a device that provides voice and/or data connectivity to a user, a handheld device with a wireless connection function, or other processing devices connected to a wireless modem, etc. In different systems, the names of terminal device may also be different. For example, in a 5G system, the terminal device may be called a User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, a portable, pocket-sized, handheld, computer-built-in or vehicle-mounted mobile device, which exchanges audio and/or data with a radio access network; for example, a Personal Communication Service (PCS) phone, a cordless phone, a Session Initiated Protocol (SIP) phone, a Wireless Local Loop (WLL) station, a Personal Digital Assistant (PDA) or another device. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present disclosure.

The network device involved in the embodiments of the present disclosure may be a base station, and the base station may include multiple cells that provide services to the terminal. Depending on the specific application, a base station can also be called an access point, or it can be a device in the access network that communicates with the wireless terminal device through one or more sectors on the air interface, or it can be named by another name. A network device can be used to exchange received radio frames with Internet Protocol (IP) packets and act as a router between the wireless terminal device and the rest of the access network, wherein the rest of the access network can include the IP communications network. The network devices may also coordinate attribute management of the air interface. For example, the network device involved in the embodiments of the present disclosure may be a network device (Base Transceiver Station, BTS) in Global System for Mobile communications (GSM) system or Code Division Multiple Access (CDMA) system, or it can be a network device (NodeB) in a Wide-band Code Division Multiple Access (WCDMA) system, or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which is not limited in the embodiments of the present disclosure. In some network structures, the network devices may include a Centralized Unit (CU) node and a Distributed Unit (DU) node, and the centralized unit and distributed unit may also be arranged geographically separately.

The network device and the terminal device may each perform Multi-Input Multi-Output (MIMO) transmission with each other by using one or more antennas. The MIMO transmission may be Single User MIMO (SU-MIMO) or Multiple User MIMO (MU-MIMO) transmission. According to the configuration and quantity of antenna combinations, the MIMO transmission may be two Dimensional-MIMO (2D-MIMO) transmission, three Dimensional-MIMO (3D-MIMO) transmission, Full Dimensional-MIMO (FD-MIMO) or massive-MIMO transmission, and may be diversity transmission, pre-coded transmission, beam forming transmission, or the like.

In the following, it first introduces the contents involved in the solutions provided by the embodiments of the present disclosure.

The technical solutions for the downlink positioning mainly include a delay-based DL-TDOA (Downlink Time Difference Of Arrival) positioning method and an angle-based DL-AoD (Downlink Angle-of-Departure) positioning method. For the DL-TDOA delay positioning method, a position of the terminal is estimated through the relative delay between base stations based on the different propagation distances of the terminal relative to respective base stations. For the DL-AoD angle positioning method, the position of the terminal is determined through multiple angle parameters based on a position direction of the terminal relative to the base station. A specific technical solution is shown in Fig. 2.

The positioning steps based on the DL-AoD angle estimation include:

(1) each of a gNB1 (a base station 1), a gNB2 (a base station 2), and a gNB3 (a base station 3) sends a periodic DL-PRS to a UE;
(2) the UE (terminal) measures, based on configuration information for the gNBs around the UE to send the DL-PRS provided by a Location Management Function (LMF), a DL-PRS (Downlink Positioning Reference Signal) beam signal of each of the gNBs, and reports the DL-PRS RSRP (Reference Signal Received Power) measurement value to the LMF;

(3) the LMF uses the DL-PRS RSRP reported by the UE and other known information (such as a sending direction of each DL-PRS beam of each gNB) to determine an angle of the UE relative to each gNB, that is, a DL-AoD;

(4) the LMF uses the obtained DL-AoD and a geographic coordinate of each gNB to calculate the position of the UE.

The positioning steps of the DL-TDOA include:

(1) each of a gNB1, a gNB2, and agNB3 sends a periodic DL-PRS to a UE;

(2) the UE obtains the configuration information of the DL-PRS sent by the gNBs around the UE based on the DL-TDOA auxiliary data provided by the LMF. By receiving the DL-PRS of each gNB, the UE first estimates the TOA (Time of Arrival) measurement value between the UE and each gNB, and then calculates the Downlink Reference Signal Arrival Time Difference (DL-PRS RSTD);

(3) the DL-PRS RSTD obtained by the UE and other known information (such as a geographic coordinate of the gNB) can be used to calculate the position of the UE through either a network-based positioning method or a UE-based positioning method.

a) In a network-based positioning method, the UE reports the obtained DL-PRS RSTD measurement value to the LMF, and the LMF uses the reported measurement value and other known information (such as the geographic coordinate of the gNB) to calculate the position of the UE.

b) In a UE-based positioning method, the UE itself calculates its own position using the obtained DL-PRS RSTD and other information provided by the network (such as the geographic coordinate of the gNB).

Based on the above, the embodiments of the present disclosure provide an information transmission method, an information transmission apparatus and a device to solve the problem in the related art that a receiver cannot accurately receive a Sidelink-Positioning Reference Signal (S-PRS). The method, apparatus, and device are based on the same inventive concept, and since the principles for solving the problem are similar, the implementation of the method, apparatus, and device can refer to each other, and repetitive descriptions will not be elaborated herein.

The embodiments of the present disclosure provide an information transmission method, applied to a first device, as shown in Fig. 3, includes:

step 31: sending first information to a second device; wherein the first information includes: at least one of expected angle information or uncertainty range information of the expected angle information; the expected angle information is: angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit.

The "expected" may specifically refer to "expected by the second device", such as expected by the second terminal; or it may refer to that the first device intends to send to the second device, such as that the first terminal intends to send to the second terminal, but the present disclosure is not limited thereto.

The information transmission method provided by the embodiment of the present disclosure involves sending first information to a second device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit. This method enables assisting the second device in determining the approximate angle range for searching the S-PRS, thereby assisting to improve a reception success rate of the S-PRS, avoiding a positioning deviation caused by failure to receive the S-PRS, thereby improving the positioning accuracy; it effectively solves the problem in the related art that a receiver cannot accurately receive the S-PRS.

The expected angle information includes at least one of the followings: an expected Sidelink Azimuth angle of Departure (SL-AoD); an expected Sidelink Zenith angle of Departure (SL-ZoD); an expected Sidelink Azimuth angle of Arrival (SL-AoA); or an expected Sidelink Zenith angle of Arrival (SL-ZoA). The "expected" may specifically refer to "expected by the second device", such as expected by the second terminal; or it may refer to that the first device intends to send to the second device, such as that the first terminal intends to send to the second terminal, but the present disclosure is not limited thereto.

In the embodiments of the present disclosure, the expected SL-AoD is an expected value of the departure azimuth angle of the S-PRS; and/or, the expected SL-ZoD is an expected value of the departure vertical angle of the S-PRS; and/or, the expected SL-AoA is an expected value of the arrival azimuth angle of the S-PRS; and/or, the expected SL-ZoA is an expected value of the arrival vertical angle of the S-PRS.

The SL-AoD and the SL-AoA are represented as: azimuth angle information defined in a Global Coordinate System (GCS); or, azimuth angle information defined in a Local Coordinate System (LCS); and/or the SL-ZoD and the SL-ZoA are represented as: vertical angle information defined in the GCS; or, vertical angle information defined in the LCS.

In the embodiments of the present disclosure, the SL-ZoD is represented as an angle between a first departure angle and a Z axis of a first coordinate system; the SL-ZoA is represented as the angle between a first arrival angle and the Z axis of the first coordinate system; and/or the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system; wherein the first coordinate system is the GCS or the LCS; the first departure angle is the expected sidelink departure angle between the first terminal and the second terminal; the first arrival angle is the expected sidelink arrival angle between the first terminal and the second terminal; the X axis in the GCS points toward a geographic north direction and the Z axis points toward a zenith direction. Specifically, the SL-ZoD is represented as an angle between a first departure angle and a Z axis of a GCS; the SL-ZoA is represented as the angle between a first arrival angle and the Z axis of the GCS; or the SL-ZoD is represented as an angle between a first departure angle and a Z axis of a LCS; the SL-ZoA is represented as the angle between a first arrival angle and the Z axis of the LCS; and/or the SL-AoD is represented as an angle between a projection direction obtained after a first departure angle is projected onto a plane formed by an X axis and a Y axis of a GCS and the X axis of the GCS; the SL-AoA is represented as the angle between the projection direction obtained after a first arrival angle is projected onto the plane formed by the X axis and the Y axis of the GCS and the X axis of the GCS; or the SL-AoD is represented as an angle between a projection direction obtained after a first departure angle is projected onto a plane formed by an X axis and a Y axis of a LCS and the X axis of the LCS; the SL-AoA is represented as the angle between the projection direction obtained after a first arrival angle is projected onto the plane formed by the X axis and the Y axis of the LCS and the X axis of the LCS; wherein the first departure angle is the expected sidelink departure angle between the first terminal and the second terminal; the first arrival angle is the expected sidelink arrival angle between the first terminal and the second terminal; the X axis in the GCS points toward a geographic north direction and the Z axis points toward a zenith direction.

The uncertainty range of the expected SL-AoD represents a value range of the expected SL-AoD; and/or an uncertainty range of the expected SL-ZoD represents a value range of the expected SL-ZoD; and/or an uncertainty range of the expected SL-AoA represents a value range of the expected SL-AoA; and/or an uncertainty range of the expected SL-ZoA represents a value range of the expected SL-ZoA.

In the embodiments of the present disclosure, an angle range of the sidelink departure angle or the sidelink arrival angle represented by the expected angle information and the uncertainty range information is as follows: [A-B/2, A+B/2]; wherein A represents an angle corresponding to the expected angle information; B represents an angle corresponding to the uncertainty range information.

In addition, before sending the first information to the second device, the method further includes: using a first mode to determine the first information; wherein the first mode includes at least one of the followings: performing processing based on zone IDs of the first terminal and the second terminal; measuring a sidelink signal or channel; performing processing based on historical location information of the first terminal and the second terminal; or performing processing based on relative angle information between the first terminal and the second terminal obtained by ranging.

Accordingly, it enables to obtain the first information accurately.

The performing processing based on the zone IDs of the first terminal and the second terminal includes: receiving Physical Sidelink Control Channel (PSCCH) information sent by the second terminal; obtaining the zone ID of the second terminal based on the PSCCH information; determining the zone ID of the first terminal; performing processing based on the zone IDs of the first terminal and the second terminal.

In the embodiments of the present disclosure, the measuring a sidelink signal or channel includes at least one of the followings: measuring a Sidelink Synchronization Signal Block (S-SSB) sent by the second terminal; measuring a Physical Sidelink Shared Channel (PSSCH) sent by the second terminal; or measuring a Physical Sidelink Control Channel (PSCCH) sent by the second terminal.

In addition, the first information further includes at least one of the followings: first indication information, which is used to indicate an object generating the angle information; or second indication information, which is used to indicate a type of the angle information.

This allows the second device to know a source and/or type of the angle information.

The object includes: the first terminal, the third terminal, the base station, the RSU or the positioning server; and/or the type includes: angle information in a Global Coordinate System (GCS), or angle information in a Local Coordinate System (LCS).

In the embodiments of the present disclosure, in the case that the type is the angle information in the LCS, the second indication information is further used to indicate conversion relationship information from the LCS to the GCS.

This ensures that relevant information such as the angle in the GCS can be obtained.

In addition, the first information further includes at least one of the followings: measurement confidence of the angle information; measurement quality indication information of the angle information; a resolution of the angle information; or a mode for sending the angle information.

In the embodiments of the present disclosure, the measurement confidence refers to: the probability that an error value of the angle measurement corresponding to the angle information is in a confidence interval; the two endpoint values of the confidence interval are configured by the first device; and/or, the measurement quality indication information includes: at least one of the error value, an error resolution or the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or, the resolution $R=2^k$, where k is configured based on at least one of carrier operating frequency, a carrier bandwidth, Sub-Carrier Spacing (SCS), in-coverage or out-of-coverage or partial coverage, indoor or outdoor, a speed range, a positioning priority, or a positioning accuracy requirement; and/or, the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

The "carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement" may correspond to the first terminal or the second terminal, but the present disclosure is not limited thereto.

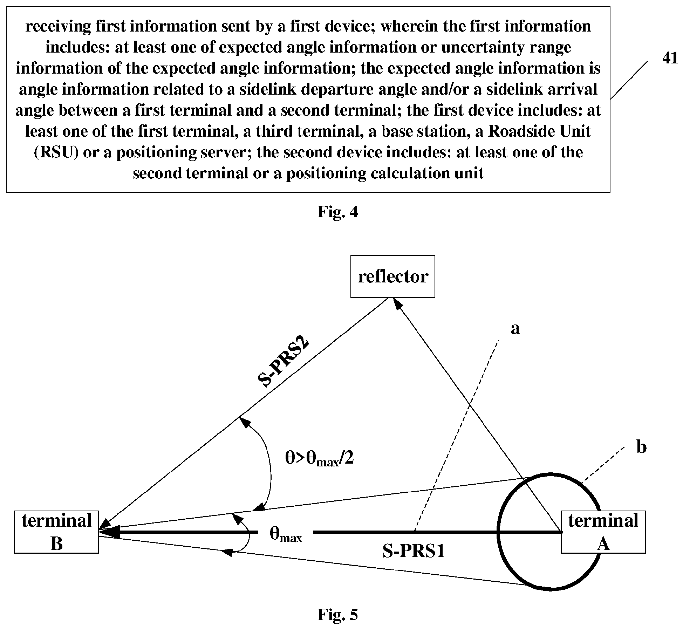

The embodiments of the present disclosure further provide an information transmission method, applied to a second device, as shown in Fig. 4, includes: step 41: receiving first information sent by a first device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit.

The "expected" may specifically refer to "expected by the second device", such as expected by the second terminal; or it may refer to that the first device intends to send to the second device, such as that the first terminal intends to send to the second terminal, but the present disclosure is not limited thereto.

The information transmission method provided by the embodiment of the present disclosure involves receiving first information sent by a first device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit. This method enables assisting the second device in determining the approximate angle range for searching the S-PRS, thereby assisting to improve a reception success rate of the S-PRS, avoiding a positioning deviation caused by failure to receive the S-PRS, thereby improving the positioning accuracy; it effectively solves the problem in the related art that a receiver cannot accurately receive the S-PRS.

The expected angle information includes at least one of the followings: an expected Sidelink Azimuth angle of Departure (SL-AoD); an expected Sidelink Zenith angle of Departure (SL-ZoD); an expected Sidelink Azimuth angle of Arrival (SL-AoA); or an expected Sidelink Zenith angle of Arrival (SL-ZoA). The "expected" may specifically refer to "expected by the second device", such as expected by the second terminal; or it may refer to that the first device intends to send to the second device, such as that the first terminal intends to send to the second terminal, but the present disclosure is not limited thereto.

In the embodiments of the present disclosure, the expected SL-AoD is an expected value of the departure azimuth angle of the S-PRS; and/or, the expected SL-ZoD is an expected value of the departure vertical angle of the S-PRS; and/or, the expected SL-AoA is an expected value of the arrival azimuth angle of the S-PRS; and/or, the expected SL-ZoA is an expected value of the arrival vertical angle of the S-PRS.

The SL-AoD and the SL-AoA are represented as: azimuth angle information defined in a Global Coordinate System (GCS); or, azimuth angle information defined in a Local Coordinate System (LCS); and/or the SL-ZoD and the SL-ZoA are represented as: vertical angle information defined in the GCS; or, vertical angle information defined in the LCS.

In the embodiments of the present disclosure, the SL-ZoD is represented as an angle between a first departure angle and a Z axis of a first coordinate system; the SL-ZoA is represented as the angle between a first arrival angle and the Z axis of the first coordinate system; and/or the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system; wherein the first coordinate system is the GCS or the LCS; the first departure angle is the expected sidelink departure angle between the first terminal and the second terminal; the first arrival angle is the expected sidelink arrival angle between the first terminal and the second terminal; the X axis in the GCS points toward a geographic north direction and the Z axis points toward a zenith direction. Specifically, the SL-ZoD is represented as an angle between a first departure angle and a Z axis of a GCS; the SL-ZoA is represented as the angle between a first arrival angle and the Z axis of the GCS; or the SL-ZoD is represented as an angle between a first departure angle and a Z axis of a LCS; the SL-ZoA is represented as the angle between a first arrival angle and the Z axis of the LCS; and/or the SL-AoD is represented as an angle between a projection direction obtained after a first departure angle is projected onto a plane formed by an X axis and a Y axis of a GCS and the X axis of the GCS; the SL-AoA is represented as the angle between the projection direction obtained after a first arrival angle is projected onto the plane formed by the X axis and the Y axis of the GCS and the X axis of the GCS; or the SL-AoD is represented as an angle between a projection direction obtained after a first departure angle is projected onto a plane formed by an X axis and a Y axis of a LCS and the X axis of the LCS; the SL-AoA is represented as the angle between the projection direction obtained after a first arrival angle is projected onto the plane formed by the X axis and the Y axis of the LCS and the X axis of the LCS; wherein the first departure angle is the expected sidelink departure angle between the first terminal and the second terminal; the first arrival angle is the expected sidelink arrival angle between the first terminal and the second terminal; the X axis in the GCS points toward a geographic north direction and the Z axis points toward a zenith direction.

An uncertainty range of the expected SL-AoD represents a value range of the expected SL-AoD; and/or an uncertainty range of the expected SL-ZoD represents a value range of the expected SL-ZoD; and/or an uncertainty range of the expected SL-AoA represents a value range of the expected SL-AoA; and/or an uncertainty range of the expected SL-ZoA represents a value range of the expected SL-ZoA.

In the embodiments of the present disclosure, an angle range of the sidelink departure angle or the sidelink arrival angle represented by the expected angle information and the uncertainty range information is as follows: [A-B/2, A+B/2]; wherein A represents an angle corresponding to the expected angle information; B represents an angle corresponding to the uncertainty range information.

In addition, the first information is determined by the first device using a first mode; wherein the first mode includes at least one of the followings: performing processing based on zone IDs of the first terminal and the second terminal; measuring a sidelink signal or channel; performing processing based on historical location information of the first terminal and the second terminal; or performing processing based on relative angle information between the first terminal and the second terminal obtained by ranging.

Accordingly, it enables to obtain the first information accurately.

In the case that the first mode includes processing according to the zone IDs of the first terminal and the second terminal, before receiving the first device, the method further includes: sending physical sidelink control channel PSCCH information to the first device; the PSCCH information carries the zone ID of the second terminal.

This facilitates the first device in performing "processing based on zone IDs of the first terminal and the second terminal".

The measuring a sidelink signal or channel includes at least one of the followings: measuring a Sidelink Synchronization Signal Block (S-SSB) sent by the second terminal; measuring a Physical Sidelink Shared Channel (PSSCH) sent by the second terminal; or measuring a Physical Sidelink Control Channel (PSCCH) sent by the second terminal.

In addition, the first information further includes at least one of the followings: first indication information, which is used to indicate an object generating the angle information; or second indication information, which is used to indicate a type of the angle information.

This allows the second device to know a source and/or type of the angle information.

The object includes: the first terminal, the third terminal, the base station, the RSU or the positioning server; and/or the type includes: angle information in a Global Coordinate System (GCS), or angle information in a Local Coordinate System (LCS).

In the embodiments of the present disclosure, in the case that the type is the angle information in the LCS, the second indication information is further used to indicate conversion relationship information from the LCS to the GCS.

This ensures that relevant information such as the angle in the GCS can be obtained.

In addition, the first information further includes at least one of the followings: measurement confidence of the angle information; measurement quality indication information of the angle information; a resolution of the angle information; or a mode for sending the angle information.

In the embodiments of the present disclosure, the measurement confidence refers to the probability that an error value of the angle measurement corresponding to the angle information is within a confidence interval; the two endpoint values of the confidence interval are configured by the first device; and/or, the measurement quality indication information includes: at least one of the error value, an error resolution or the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or, the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or, the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

In addition, after receiving the first information sent by the first device, it further includes: determining the location information of the second terminal based on the first information.

This enables a terminal positioning.

The information transmission methods provided by the embodiments of the present disclosure are illustrated below.

To address the aforementioned technical problem, the embodiments of the present disclosure provide an information transmission method, which can be specifically implemented as a method for sending sidelink angle search window information (corresponding to the above first information), mainly involving: at least one device, such as a terminal A (corresponding to the above first terminal), a terminal C (corresponding to the above third terminal), a base station, an RSU, and at least one device in the positioning server (corresponding to the above first device), sending first angle information (corresponding to the above first information) to a terminal B or a positioning calculation unit (corresponding to the above second device); wherein the first angle information includes expected angle information (of the terminal B). The expected angle information is related to the sidelink departure angle or the sidelink arrival angle between the terminal A and the terminal B. The terminal B or the positioning calculation unit receives a Sidelink-Positioning Reference Signal (S-PRS) or performs a terminal positioning (i.e., determining location information of a second terminal) based on the first angle information. The first device is in communication with the terminal B, and the first device can send an S-PRS beam. Specifically, this solution involves the following parts.

Part 1: the first angle information includes the expected SL-AoD (Sidelink Azimuth angle of Departure) and/or SL-ZoD (Sidelink Zenith angle of Departure), or the expected SL-AoA (Sidelink Azimuth angle of Arrival) and/or SL-ZoA (Sidelink Zenith angle of Arrival);

(1) the first angle information includes the expected SL-AoD and/or SL-ZoD: the unit thereof is degree or radian;

a) the expected SL-AoD may be the sidelink departure azimuth angle expected by the terminal B, that is, the expected value of the departure azimuth angle of the S-PRS;
b) the expected SL-ZoD may be the sidelink departure vertical angle expected by the terminal B, that is, the expected value of the departure vertical angle of the S-PRS.

(2) The first angle information includes the expected SL-AoA and/or SL-ZoA: the unit thereof is degree or radian;

a) the expected SL-AoA may be the expected sidelink arrival azimuth angle of the terminal B, that is, the expected value of the arrival azimuth angle of the S-PRS;
b) the expected SL-ZoA may be the expected sidelink arrival vertical angle of the terminal B, that is, the expected value of the arrival vertical angle of the S-PRS.

Part 2, the first angle information includes the uncertainty range (corresponding to the above uncertainty range information, when only this range is sent, a middle value of the range can be considered as the expected value, but the present disclosure is not limited thereto);
(3) the first angle information includes the uncertainty range of the expected SL-AoD and/or SL-ZoD: the unit thereof is degree or radian;

a) it represents the uncertainty range (Uncertainty1 and/or Uncertainty2) of the expected SL-AoD and/or SL-ZoD (i.e., EAoD1 and/or EZoD1);

i. the indicated SL-AoD range is [EAoD1-(Uncertainty1)/2, EAoD1+(Uncertainty1)/2];
ii. the indicated SL-ZoD range is [EZoD1-(Uncertainty2)/2, EZoD1+(Uncertainty2)/2].

(4) The first angle information includes the uncertainty range of the expected SL-AoA and/or SL-ZoA; the unit thereof is degree or radian;

> a) it represents the uncertainty range (Uncertainty3 and/or Uncertainty4) of the expected SL-AoA and/or SL-ZoA (i.e., EAoA1 and/or EZoA1);
>
>> i. the indicated SL-AoA range is [EAoA1-(Uncertainty3)/2, EAoA1+(Uncertainty3)/2];
>> ii. the indicated SL-ZoA range is [EZoA1-(Uncertainty4)/2, EZoA1+(Uncertainty4)/2].

Part 3, determining the first angle information through zone IDs of the terminal A and the terminal B;

(5) the terminal A, the terminal C, the base station, the RSU, or the positioning server determines the first angle information between the terminal A and the terminal B based on zone ID information of the terminal A and zone ID information of the terminal B (corresponding to performing processing based on zone IDs of the first terminal and the second terminal). The terminals A and B may report the zone IDs to other devices, but the present disclosure is not limited thereto.

> a) When terminal B previously sent the SL-PRS, it simultaneously provided its zone ID information;
> b) the terminal A or the terminal C obtains the zone ID information of the terminal B based on the previously received the PSCCH (sent by the terminal B).
> Part 4: determining the first angle information by other means;

(6) the terminal A determines the first angle information between itself and terminal B by measuring a sidelink signal or channel, and then sends the first angle information to the terminal B (corresponding to the measuring the sidelink signal or channel);

> a) the terminal A determines the first angle information by measuring an S-SSB (Sidelink Synchronization Signal Block) sent by the terminal B;
> b) the terminal A determines the first angle information by measuring a Physical Sidelink Shared Channel (PSSCH) and/or a Physical Sidelink Control Channel (PSCCH) sent by the terminal B.

(7) The base station or a Location Management Function (LMF) (belonging to the positioning server) determines the first angle information based on the historical location information of the terminal A and the terminal B (corresponding to the performing the processing based on historical location information of the first terminal and the second terminal).

(8) It determines first angle information based on the relative angle information between terminal A and terminal B obtained by ranging (corresponding to the performing the processing based on relative angle information between the first terminal and the second terminal obtained by ranging).

Part 5, source and type indication of the first angle information;

(9) the terminal A, the base station, the RSU or the positioning server may send the first angle information to the terminal B or the positioning calculation unit;

(10) the first angle information includes first indication information, which is used to indicate the source of the angle information being sent (corresponding to the first indication information used to indicate the object generating the angle information), including at least one of the following sources:

> a) the terminal (corresponding to the first terminal and the third terminal);
> b) the base station;
> c) the RSU; or
> d) the positioning server.

(11) The first angle information includes second indication information, which is used to indicate the type of angle information being sent (corresponding to the second indication information used to indicate the type of angle information), including at least one of the following angle information:

> a) angle information in a Global Coordinate System (GCS); or
> b) angle information in a Local Coordinate System (LCS).
> c) When the second indication information indicates that the angle information to be sent is the angle information in the LCS, it is also necessary to simultaneously indicate the conversion relationship information from the LCS to the GCS (corresponding to be in the case that the type is the angle information in the LCS, the second indication information is further used to indicate conversion relationship information from the LCS to the GCS).

Part 6, definition mode 1 of the first angle information (GCS);

(12) the first angle information includes at least one of the first vertical angle information or the first azimuth angle information defined in the GCS.

(13) The first vertical angle information (SL-ZoD, SL-ZoA) represents an angle between the expected sidelink departure angle (corresponding to the above-mentioned first departure angle) or the expected sidelink arrival angle (corresponding to the above-mentioned first arrival angle) between the terminal A and the terminal B and a Z axis of the GCS: the unit of the first vertical angle information is radian or degree.

(14) The first azimuth angle information (SL-AoD, SL-AoA) represents the angle between a projection direction obtained after the expected sidelink departure angle (corresponding to the first departure angle) or the expected sidelink arrival angle (corresponding to the first arrival angle) between the terminal A and the terminal B is projected onto a plane formed by the X axis and Y axis of the GCS and the X axis of the GCS: the unit of the first azimuth angle information is radian or degree.

(15) The X axis in the GCS points toward a geographic north direction and the Z axis points toward a zenith direction

Part 7, definition mode 2 of the first angle information (LCS);

(16) the first angle information includes at least one of the second vertical angle information or the second azimuth angle information defined in the LCS.

(17) The second vertical angle information (SL-ZoD, SL-ZoA) represents the angle between the expected sidelink departure angle (corresponding to the first departure angle) or the expected sidelink arrival angle (corresponding to the first arrival angle) between the terminal A and the terminal B and the Z axis of the LCS: the unit of the second vertical angle information is radian or degree.

(18) The second azimuth angle information (SL-AoD, SL-AoA) represents the angle between the projection direction obtained after the expected sidelink departure angle (corresponding to the first departure angle) or the expected sidelink arrival angle (corresponding to the first arrival angle) between the terminal A and the terminal B is projected onto the plane formed by the X axis and Y axis of the LCS and the X axis of the LCS: the unit of the second azimuth angle information is radian or degree.

Part 8, measurement confidence of the first angle information (corresponding to the first information further including the measurement confidence of the angle information);

(19) The first vertical angle or the first azimuth angle corresponds to measurement confidence level information. The confidence level Y1 refers to: the probability that an error value of the first angle measurement $E1_V$ is in a confidence interval $[X1_{min}, X1_{max}]$ (corresponding to that the measurement confidence refers to: the probability that the error value of the angle measurement corresponding to the angle information is in the confidence interval), that is:

$$Y1 = \mathrm{Prob}\{X1_{min} \leq E1_V \leq X1_{max}\};$$

wherein $X1_{min}$, $X1_{max}$ are configuration information (corresponding to that the two endpoint values of the confidence interval are configured by the first device).

(20) The second vertical angle or the second azimuth angle also corresponds to measurement confidence level information. The confidence level Y2 refers to the probability that the error value of the second angle measurement $E2_V$ V is in the confidence interval $[X2_{min}, X2_{max}]$ (corresponding to that the measurement confidence refers to the probability that the error value of the angle measurement corresponding to the angle information is in the confidence interval), that is:

$$Y2 = \mathrm{Prob}\{X2_{min} \leq E2_V \leq X2_{max}\};$$

wherein $X2_{min}$, $X2_{max}$ are the configuration information (corresponding to that the two endpoint values of the confidence interval are configured by the first device).

Part 9, measurement quality indication information of the first angle information (corresponding to that the first information further includes the measurement quality indication information of the angle information);

(21) The first vertical angle or the first azimuth angle corresponds to measurement quality indication information. The quality indication information of the first angle measurement includes at least one of the error value $E1_V$, an error resolution $E1_R$, or the number of error sampling points $E1_N$. The error value $E1_R$ refers to the optimal estimate of the uncertainty of the measurement value (corresponding to the angle measurement); the error resolution $E1_R$ refers to the quantization step size of the indication domain where the error value $E1_V$ is located; the number of error sampling points $E1_N$ refers to the number of measurement used when calculating the error value $E1_V$.

(22) The second vertical angle or the second azimuth angle also corresponds to a measurement quality indication information. The quality indication information of the second angle measurement includes at least one of the error value $E2_V$, the error resolution $E2_R$, or the number of error sampling points $E2_N$. The error value $E2_R$ refers to the optimal estimate of the uncertainty of the measurement value (corresponding to the angle measurement); the error resolution $E2_R$ refers to the quantization step size of the indication domain where the error value $E2_V$ is located; the number of error sampling points $E2_N$ refers to the number of measurement used when calculating the error value $E2_V$.

Part 10, resolution of the first angle information (corresponding to that the first information further includes the resolution of the angle information);

(23) the resolution $R_1$ of the first vertical angle or the first azimuth angle may be:

$$R_1 = 2^{k_1};$$

wherein $k_1$ is a real number, and its value can be configured. The smaller the value of $k_1$, the higher the resolution of the first vertical angle or the first azimuth angle.

(24) The resolution $R_2$ of the second vertical angle or the second azimuth angle may be:

$$R_2 = 2^{k_2};$$

wherein $k_2$ is a real number, and its value can be configured. The smaller the value of $k_2$, the higher the resolution of the second vertical angle or the second azimuth angle.

(25) Based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement, wherein the value of the resolution $k_1$ or $k_2$ is configured to meet the positioning accuracy requirement.

Part 11, the mode for sending the first angle information (corresponding to that the first information further includes the mode for sending the angle information);

(26) When the terminal A, the terminal C, the base station, the RSU or the positioning server measures and sends the first angle information:

a) regarding the periodicity of sending the first angle information:

    i. the first angle information is sent periodically (corresponding to the periodic sending occasion): the sending period is T;
    ii. the first angle information is sent based on an event (corresponding to the event-triggered sending occasion): the sending is triggered by the event, for example: when the measurement value of the first angle information exceeds a certain preset threshold H, the sending of the first angle information will be triggered.

b) Regarding a path of sending the first angle information:

    i. the LMF sends it to the terminal through an LPP signaling;
    ii. the terminal sends it to another terminal or the RSU through a PC5-RRC signaling;
    iii. the base station sends it to the terminal through an RRC signaling.

Part 12, terminal position calculation (corresponding to determining the location information of the second terminal based on the first information);

(27) when it is a terminal-based (UE-based) positioning solution, the first angle information is sent to the terminal, and the terminal completes the terminal position calculation based on the first angle information and other information.

(28) When it is a network-based positioning solution, the first angle information is sent to the positioning calculation unit, and the positioning calculation unit completes the terminal position calculation based on the first angle information and other information.

The followings are specific examples of the solutions provided by the embodiments of the present disclosure.

Example 1 (first angle information includes an expected value and uncertainty):

A terminal A sends first angle information to a terminal B, wherein the first angle information includes expected angle information. The expected angle information is related to a sidelink departure angle or a sidelink arrival angle between the terminal A and the terminal B. The terminal B receives a Sidelink-Positioning Reference Signal (S-PRS) or performs a terminal positioning based on the first angle information.

Specifically, in a sidelink positioning, the terminal A sends the S-PRS, and in order to complete a relative positioning between itself and the terminal A, the terminal B receives the S-PRS sent by the terminal A and determines the relative distance between the terminal B and the terminal A. In order to determine a most appropriate S-PRS receiving angle window for the terminal B, the terminal A sends the first angle information to the terminal B, and the first angle information includes expected angle information. The expected angle information is related to the sidelink departure angle or the sidelink arrival angle between the terminal A and the terminal B. The terminal B receives the S-PRS or performs the terminal positioning based on the first angle information.

The first angle information includes the expected SL-AoD and/or SL-ZoD, and the uncertainty range of the expected SL-AoD and/or SL-ZoD. The following provides a detailed introduction to these four items in the first angle information.

(1) the first angle information includes the expected SL-AoD and/or SL-ZoD: the unit thereof is degree or radian;

> a) the expected SL-AoD is the sidelink departure azimuth angle expected by the terminal B, that is, the expected value of the departure azimuth angle of the S-PRS;
> b) the expected SL-ZoD is the sidelink departure vertical angle expected by the terminal B, that is, the expected value of the departure vertical angle of the S-PRS.

(2) The first angle information includes the expected SL-AoA and/or SL-ZoA: the unit thereof is degree or radian;

> a) the expected SL-AoA is the expected sidelink arrival azimuth angle of the terminal B, that is, the expected value of the arrival azimuth angle of the S-PRS;
> b) the expected SL-ZoA is the expected sidelink arrival vertical angle of the terminal B, that is, the expected value of the arrival vertical angle of the S-PRS.

(3) the first angle information includes the uncertainty range of the expected SL-AoD and/or SL-ZoD: the unit thereof is degree or radian;

> a) it represents the uncertainty range (Uncertainty1 and/or Uncertainty2) of the expected SL-AoD and/or SL-ZoD (i.e., EAoD1 and/or EZoD1);
>
>> i. the indicated SL-AoD range is [EAoD1-(Uncertainty1)/2, EAoD1+(Uncertainty1)/2];
>> ii. the indicated SL-ZoD range is [EZoD1-(Uncertainty2)/2, EZoD1+(Uncertainty2)/2].

(4) The first angle information includes the uncertainty range of the expected SL-AoA and/or SL-ZoA: the unit thereof is degree or radian;

> a) it represents the uncertainty range (Uncertainty3 and/or Uncertainty4) of the expected SL-AoA and/or SL-ZoA (i.e., EAoA1 and/or EZoA1);
>
>> i. the indicated SL-AoA range is [EAoA1-(Uncertainty3)/2, EAoA1+(Uncertainty3)/2];
>> ii. the indicated SL-ZoA range is [EZoA1-(Uncertainty4)/2, EZoA1+(Uncertainty4)/2].

For example, as shown in Fig. 5, the S-PRS sent by the terminal A often uses beam scanning. The beam directions of an S-PRS1 and an S-PRS2 are very different. For the terminal B, it can receive the S-PRS1 because the S-PRS1 is a direct path, which is more accurate for calculating the relative distance or angle between the terminal B and the terminal A. In contrast, the S-PRS2 is a reflected path. When the terminal B uses the S-PRS2 to calculate the relative distance or angle between the terminal B and the terminal A, it will result in a significant deviation. Therefore, the terminal A notifies the terminal B of the angle search window information of the S-PRS in advance, that is, the expected SL-AoD and the uncertainty range of the expected SL-AoD (that is, $\theta_{max}$). This allows the terminal B to successfully search and receive the S-PRS1 within the angle search window, and thus the reception of the S-PRS2 is prevented, thereby improving the accuracy of the relative positioning.

In Fig. 5, "a" represents the expected SL-AoD, and "b" represents the angle search window of the SL-AoD.

From the above, in this example, the terminal A can assist the terminal B in determining the approximate angle range for searching for the S-PRS by sending the expected angle and uncertainty range information of the sidelink departure angle or the sidelink arrival angle to the terminal B, thereby assisting the terminal B to improve a reception success rate of the S-PRS, and thus preventing a positioning deviation caused by the inability of the terminal B to receive the S-PRS, thereby improving the positioning accuracy of the terminal B.

Example 2 (determining first angle information through a zone ID of a terminal A and a terminal B):

A terminal A sends first angle information to a terminal B, wherein the first angle information includes expected angle information. The expected angle information is related to the sidelink departure angle or sidelink arrival angle between the terminal A and the terminal B. The terminal B receives a Sidelink-Positioning Reference Signal (S-PRS) or performs a terminal positioning based on the first angle information.

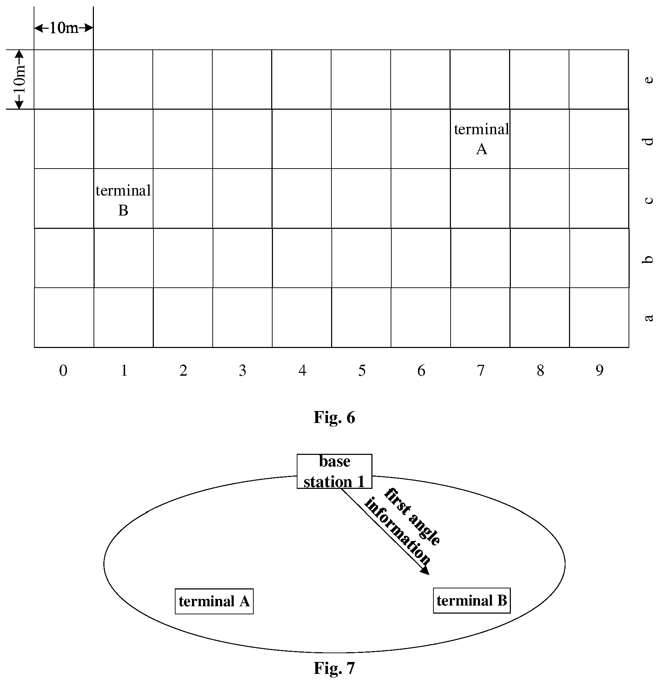

Specifically, the terminal A first determines the first angle information between terminal A and the terminal B based on zone ID information of the terminal A and the zone ID information of the terminal B. The zone ID is grid information used to represent an approximate geographical location of the terminal. As shown in Fig. 6, each square in the figure is a zone, and each zone is a geographical area of 10 meters $\times$ 10 meters. Each zone has its own unique ID. The zone ID of the terminal A is (7, d), and the zone ID of the terminal B is (1, c). The terminal B will carry the zone ID of the terminal B in the PSCCH sent to the terminal A. This allows the terminal A to calculate a relative angle between the terminal A and the terminal B based on the zone ID of the terminal B and the zone ID of the terminal A, thereby determining the first angle information.

From the above, in this example, the terminal A may determine the first angle information through the zone ID, and then notify the terminal B of the first angle information, thereby assisting the terminal B to improve a reception success rate of the S-PRS, avoiding a positioning deviation caused by the inability of the terminal B to receive the S-PRS, thereby improving the positioning accuracy of the terminal B.

Example 3 (source and type indication of first angle information):

At least one of a terminal A, a terminal C, a base station, a RSU or a positioning server sends first angle information to a terminal B or a positioning calculation unit, wherein the first angle information includes expected angle information. The expected angle information is related to a sidelink departure angle or a sidelink arrival angle between the terminal A and the terminal B. The terminal B or the positioning calculation unit receives a Sidelink-Positioning Reference Signal (S-PRS) or performs a terminal positioning based on the first angle information.

Specifically, according to different scenarios, at least one of the terminal A, the terminal C, the base station, the RSU, or the positioning server may send the first angle information to the terminal B or the positioning calculation unit; for example, in an in-coverage scenario, since the terminal B is within the signal coverage of the base station or the positioning server, the base station or the positioning server can send the first angle information to the terminal B. In an out-of-coverage scenario, since the terminal B cannot receive the signal of the base station or the positioning server, the first angle information can only be sent to the terminal B by the terminal A, the terminal C, or the RSU.

In order to facilitate the terminal B or the positioning calculation unit to use the first angle information, the first angle information may include first indication information to indicate the source of the angle information to be sent, including at least one of the following sources: a) a terminal; b) a base station; c) an RSU; or d) a positioning server.

As shown in Fig. 7, both the terminal A and the terminal B are within the coverage of a base station 1, and the base station 1 can send the first angle information to the terminal B, and the first angle information includes indication information indicating that it is from the base station 1.

In addition, since the first angle information can represent angle information between different types of devices, there are many types of first angle information. In order to indicate the type of the first angle information, second indication information can be included in the first angle information to specify what type of angle information is to be sent, including at least one of the following angle information:

a) angle information in a Global Coordinate System (GCS); or

b) angle information in a Local Coordinate System (LCS).

c) When the second indication information indicates that the sent angle information is the angle information in the LCS, it is also necessary to simultaneously indicate the conversion relationship information from the LCS to the GCS.

As shown in Fig. 7, the first angle information sent by the base station 1 to the terminal B is the angle information between the terminal A and the terminal B, and the first angle information includes angle type information.

From the above, in this example, the source and type indication solution of the first angle information proposed are used, such that the source and type of the first angle information can be notified to the terminal or the positioning calculation unit by sending the indication information to the terminal or the positioning calculation unit, thereby better assisting the terminal or positioning calculation unit to calculate a more accurate terminal position, avoiding the terminal positioning deviation caused by the lack of angle information in related art, thereby improving the positioning accuracy of the system.

Example 4 (definition mode 1 of first angle information):

At least one of a terminal A, a terminal C, a base station, a RSU or a positioning server sends first angle information to a terminal B or a positioning calculation unit, wherein the first angle information includes expected angle information. The expected angle information is related to a sidelink departure angle or a sidelink arrival angle between the terminal A and the terminal B. The terminal B or the positioning calculation unit receives a Sidelink-Positioning Reference Signal (S-PRS) or performs a terminal positioning based on the first angle information.

The first angle information includes at least one of the first vertical angle information or the first azimuth angle information defined in the GCS.

The first vertical angle information (SL-ZoD, SL-ZoA) represents the angle between the expected sidelink departure angle or expected sidelink arrival angle between the terminal A and the terminal B and the Z axis of the GCS: the unit of the first vertical angle information is radian or degree.

The first azimuth angle information (SL-AoD, SL-AoA) represents an angle between a projection direction obtained after the expected sidelink departure angle or expected sidelink arrival angle between the terminal A and the terminal B is projected onto a plane formed by the X axis and Y axis of the GCS and the X axis of the GCS: the unit of the first azimuth angle information is radian or degree.

The X axis in the GCS points toward a geographic north direction and the Z axis points toward a zenith direction

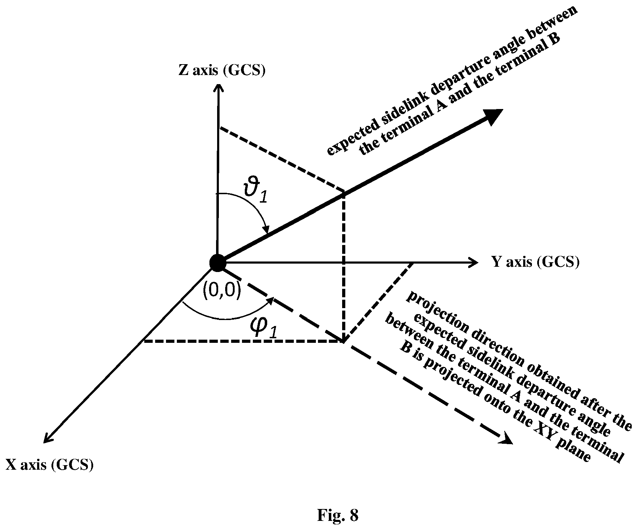

For example, as shown in Fig. 8, assuming that the terminal A is located within the coverage, the prior information of the GCS can be obtained. In the GCS, the first vertical angle information (SL-ZoD) represents that the angle $\theta_1$ between the expected sidelink departure angle between the terminal A and the terminal B and the Z axis of the GCS (i.e., zenith direction) is 45 degrees. The first azimuth angle information (SL-AoD) represents that the angle $\varphi_1$ between a projection direction obtained after the expected sidelink departure angle between the terminal A and the terminal B is projected onto the plane formed by the X axis and Y axis of the GCS (i.e., horizontal plane) and the X axis of the GCS (i.e., geographic north direction) is 60 degrees.

From the above, in this example, the first angle information is sent to the terminal or the positioning calculation unit, the first vertical angle information and the first azimuth angle information defined in the GCS can be notified to the terminal or the positioning calculation unit, thereby better assisting the terminal or positioning calculation unit to calculate a more accurate terminal position, avoiding the terminal positioning deviation caused by the lack of angle information in related art, thereby improving the positioning accuracy of the system. It is applicable to both absolute positioning and relative positioning.

Example 5 (definition mode 2 of first angle information):

At least one of a terminal A, a terminal C, a base station, a RSU or a positioning server sends first angle information to a terminal B or a positioning calculation unit, wherein the first angle information includes expected angle information. The expected angle information is related to a sidelink departure angle or a sidelink arrival angle between the terminal A and the terminal B. The terminal B or the positioning calculation unit receives a Sidelink-Positioning Reference Signal (S-PRS) or performs a terminal positioning based on the first angle information.

The first angle information includes at least one of the second vertical angle information or the second azimuth angle information defined in the LCS.

The second vertical angle information (SL-ZoD, SL-ZoA) represents the angle between the expected sidelink departure angle or the expected sidelink arrival angle between the terminal A and the terminal B and the Z axis of the LCS: the unit of the second vertical angle information is radian or degree.

The second azimuth angle information (SL-AoD, SL-AoA) represents the angle between the projection direction obtained after the expected sidelink departure angle or the expected sidelink arrival angle between the terminal A and the terminal B is projected onto the plane formed by the X axis and Y axis of the LCS and the X axis of the LCS: the unit of the second azimuth angle information is radian or degree.

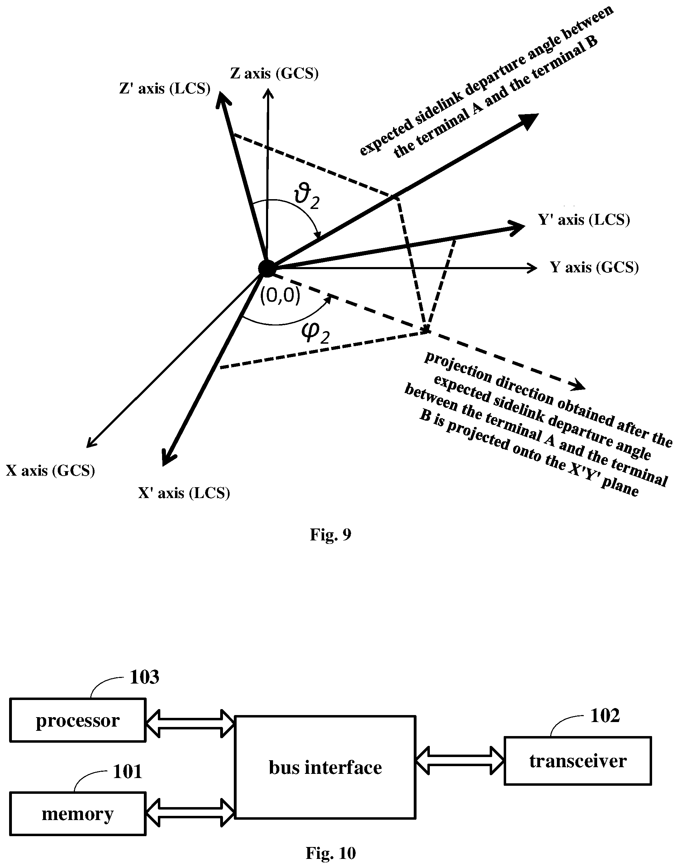

For example, as shown in Fig. 9, it assumes that the terminal A is outside of coverage and cannot obtain its position in the GCS (Global Coordinate System), so it can only use the LCS (Local Coordinate System). The second vertical angle information (SL-ZoD) indicates that the angle $\theta_2$ between the expected sidelink departure angle between the terminal A and the terminal B and the Z axis of the LCS is 55 degrees. The second azimuth angle information (SL-AoD) indicates that after the expected sidelink departure angle between the terminal A and the terminal B is projected onto the plane formed by the X axis and Y axis of the LCS, the angle $\varphi_2$ between the projection direction and the X axis of the LCS is 70 degrees.

In addition, when a relative positioning is performed between the terminals, the first angle information under the LCS is sufficient. However, when the absolute positioning is required, the conversion relationship information between the LCS and the GCS also needs to be indicated to another terminal or a positioning calculation unit, so that the absolute position of the terminal A can be calculated.

From the above, in this example, the first angle information is sent to the terminal or the positioning calculation unit, such that the second vertical angle information and the second azimuth angle information defined in the LCS can be notified to the terminal or the positioning calculation unit, thereby better assisting the terminal or positioning calculation unit to calculate a more accurate terminal position, avoiding the terminal positioning deviation caused by the lack of angle information in related art, thereby improving the relative positioning accuracy of the system.

Example 6 (measurement confidence of first angle information):

(1) The first vertical angle or the first azimuth angle corresponds to measurement confidence level information. The confidence level Y1 refers to: the probability that an error value of the first angle measurement $E1_V$ is in a confidence interval $[X1_{min}, X1_{max}]$, that is:

$$Y1 = \mathrm{Prob}\{X1_{min} \leq E1_V \leq X1_{max}\};$$

wherein $X1_{min}$, $X1_{max}$ are configuration information.

(2) The second vertical angle or the second azimuth angle also corresponds to measurement confidence level information. The confidence level Y2 refers to the probability that the error value $E2_V$ of the second angle measurement is in the confidence interval $[X2_{min}, X2_{max}]$, that is:

$$Y2 = \mathrm{Prob}\{X2_{min} \leq E2_V \leq X2_{max}\};$$

wherein $X2_{min}$ and $X2_{max}$ are the configuration information.

For example,
when the system configures the confidence interval $[X1_{min}, X1_{max}]$ as [-5 degrees, 5 degrees], and 950 error values $E1_V$ of 1000 error values $E1_V$ of the first angle measurement are in the interval [-5 degrees, 5 degrees], the confidence level Y1=95%. The terminal A can measure and report the confidence level, so that the terminal B or the positioning calculation unit can use it to evaluate the measurement quality of the first angle information.

From the above, according to the method in this example, the terminal A can measure and report the confidence level information, so that the terminal B or the positioning calculation unit can use it to evaluate the measurement quality of the first vertical angle and/or azimuth angle measurement value and the second vertical angle and/or azimuth angle measurement value.

Example 7 (measurement quality indication information of first angle information):

(1) A first vertical angle or a first azimuth angle corresponds to measurement quality indication information. Quality indication information of a first angle measurement includes at least one of an error value $E1_V$, an error resolution $E1_R$, or the number of error sampling points $E1_N$. The error value $E1_R$ refers to the optimal estimate of the uncertainty of a measurement value; the error resolution $E1_R$ refers to the quantization step size of the indication domain where the error value $E1_V$ is located; the number of error sampling points $E1_N$ refers to the number of measurements used when calculating the error value $E1_V$.

(2) A second vertical angle or a second azimuth angle also corresponds to a measurement quality indication information. Quality indication information of second angle measurement includes at least one of an error value $E2_V$, an error resolution $E2_R$, or the number of error sampling points $E2_N$. The error value $E2_R$ refers to the optimal estimate of the uncertainty of the measurement value; the error resolution $E2_R$ refers to the quantization step size of the indication domain where the error value $E2_V$ is located; the number of error sampling points $E2_N$ refers to the number of measurements used when calculating the error value $E2_V$.

For example,
when the unit of the first angle information is degree, the error value $E_V$ is replaced by 5 bits, different bit sequences represent different error values, and the error resolution $E_R$ is selected from the set of {0.01 degree, 0.1 degree, 1 degree, 5 degrees} and reported by the terminal A to meet different positioning accuracy requirements for indoor or outdoor environments. The number of error sampling points $E_N$ is the number of sampling points used by the terminal A for an error measurement, for example, it can be set to 1000.

From the above, according to the method in this example, the terminal A may measure and report information such as the error value $E_V$, the error resolution $E_R$, the number of error sampling points $E_N$, etc., enabling the terminal B or a positioning calculation unit to use it to evaluate the measurement quality of the first vertical angle and/or azimuth angle measurement value and the second vertical angle and/or azimuth angle measurement value.

Example 8 (a resolution configuration method of first angle information):

(1) the resolution $R_1$ of a first vertical angle or a first azimuth angle is:

$$R_1 = 2^{k_1};$$

wherein $k_1$ is a real number, and its value can be configured. The smaller the value of $k_1$, the higher the resolution of the first vertical angle or the first azimuth angle.

(2) The resolution $R_2$ of the second vertical angle or the second azimuth angle is:

$$R_2 = 2^{k_2};$$

wherein $k_2$ is a real number, and its value can be configured. The smaller the value of $k_2$, the higher the resolution of the second vertical angle or the second azimuth angle.

(3) Based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement, the value of the resolution k_1 or k_2 is configured to meet the positioning accuracy requirement.

From the above, according to the resolution configuration method in this example, different resolutions of the first vertical angle and/or azimuth angle measurement values and the second vertical angle and/or azimuth angle measurement values can be configured based on the actual positioning requirements of the system, thereby better assisting the terminal or positioning calculation unit to calculate a more accurate terminal position, avoiding the terminal positioning deviation caused by the lack of angle information in related art, thereby improving the positioning accuracy of the system.

Example 9 (a mode for sending first angle information):

At least one of devices, such as a terminal A, a terminal C, a base station, a RSU or a positioning server sends first angle information to a terminal B or a positioning calculation unit, wherein the first angle information includes expected angle information. The expected angle information is related to a sidelink departure angle or a sidelink arrival angle between the terminal A and the terminal B. The terminal B or the positioning calculation unit receives a Sidelink-Positioning Reference Signal (S-PRS) or performs a terminal positioning based on the first angle information.

When the terminal A, the terminal C, the base station, the RSU or the positioning server measures and sends the first angle information:

a) regarding the periodicity of sending the first angle information:

i. the first angle information is sent periodically: the sending period is T;
ii. the first angle information is sent based on an event: the sending is triggered by the event, for example: when the measurement value of the first angle information exceeds a certain preset threshold H, the sending of the first angle information will be triggered;

b) regarding a path of sending the first angle information:

i. the LMF sends it to the terminal through an LPP signaling;
ii. the terminal sends it to another terminal or the RSU through a PC5-RRC signaling;
iii. the base station sends it to the terminal through an RRC signaling.

From the above, based on different application scenarios and positioning requirements, the terminal or another network element can flexibly select the appropriate sending period and the mode for the first angle information, allowing for flexible and efficient signaling indication.

The embodiments of the present disclosure provide a method for sending sidelink angle search window information. Compared with the related art, the sidelink angle search window sending scheme proposed in the present disclosure can assist the terminal in determining the approximate angle range for searching the S-PRS by sending the expected angle and uncertainty range information of the sidelink departure angle or the sidelink arrival angle to the terminal or the positioning calculation unit, thereby assisting the terminal to improve a reception success rate of the S-PRS, avoiding a positioning deviation caused by failure to receive the S-PRS, thereby improving the positioning accuracy of the terminal.

The embodiments of the present disclosure further provide an information transmission device, which is a first device, as shown in Fig. 10 (the first device being implemented as a network device, such as a base station, a positioning server, etc.), including a memory 101, a transceiver 102, and a processor 103;
the memory 101 is configured to store a computer program; the transceiver 102 is configured to send and receive data under the control of the processor 103; the processor 103 is configured to read the computer program in the memory 101 and perform the following operations:

sending first information to a second device through the transceiver 102;
wherein the first information includes: at least one of expected angle information or uncertainty range information of the expected angle information;
the expected angle information is angle information related to a sidelink departure angle and/or a sidelink arrival angle between a first terminal and a second terminal;
the first device includes: at least one of the first terminal, a third terminal, a base station, a Roadside Unit (RSU) or a positioning server;
the second device includes: at least one of the second terminal or a positioning calculation unit.

The information transmission device provided by the embodiments of the present disclosure involves sending first information to a second device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit. This device enables assisting the second device in determining the approximate angle range for searching the S-PRS, thereby assisting to improve a reception success rate of the S-PRS, avoiding a positioning deviation caused by failure to receive the S-PRS, thereby improving the positioning accuracy; it effectively solves the problem in the related art that a receiver cannot accurately receive the S-PRS.

Specifically, the transceiver 102 is configured to receive and send data under the control of the processor 103.

In Fig. 10, the bus architecture may include any number of interconnected buses and bridges, and connects various circuits including one or more processors represented by the processor 103 and the memory represented by the memory 101. The bus architecture can also link together various other circuits such as peripherals, voltage regulators, and power management circuits, which are all well known in the art and therefore will not be described further herein. The bus interface provides the interface. The transceiver 102 may be a plurality of elements, including a transmitter and a receiver, to allow for communication with various other apparatuses on the transmission medium. The transmission medium includes wireless channels, wired channels, optical cables, and other transmission media. The processor 103 is responsible for managing the bus architecture and general processing, and the memory 101 can store data used by the processor 103 when performing operations.

The processor 103 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

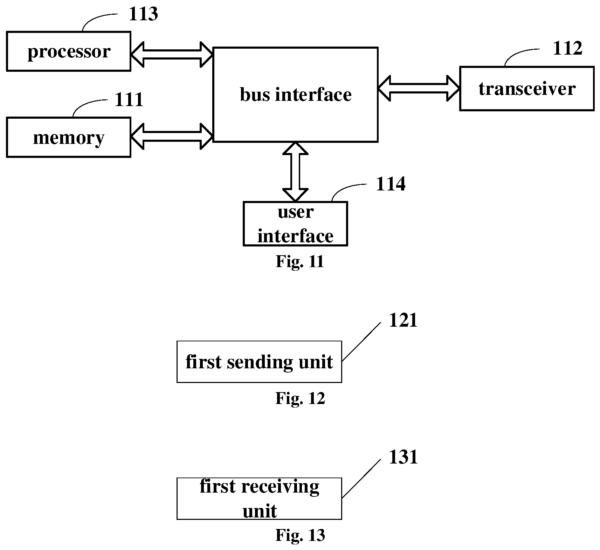

It is noted that the first device may also be implemented as a terminal (such as a first terminal, a third terminal, etc.), and the details thereof may be referred to the relevant content of Fig. 11, which will not be repeated herein.

The expected angle information includes at least one of the followings: an expected Sidelink Azimuth angle of Departure (SL-AoD); an expected Sidelink Zenith angle of Departure (SL-ZoD); an expected Sidelink Azimuth angle of Arrival (SL-AoA); or an expected Sidelink Zenith angle of Arrival (SL-ZoA).

In the embodiments of the present disclosure, the expected SL-AoD is an expected value of the departure azimuth angle of the S-PRS; and/or, the expected SL-ZoD is an expected value of the departure vertical angle of the S-PRS; and/or, the expected SL-AoA is an expected value of the arrival azimuth angle of the S-PRS; and/or, the expected SL-ZoA is an expected value of the arrival vertical angle of the S-PRS.

The expected angle information includes at least one of the followings: an expected Sidelink Azimuth angle of Departure (SL-AoD); an expected Sidelink Zenith angle of Departure (SL-ZoD); an expected Sidelink Azimuth angle of Arrival (SL-AoA); or an expected Sidelink Zenith angle of Arrival (SL-ZoA).

In the embodiments of the present disclosure, the SL-ZoD is represented as an angle between a first departure angle and a Z axis of a first coordinate system; the SL-ZoA is represented as the angle between a first arrival angle and the Z axis of the first coordinate system; and/or the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system; wherein the first coordinate system is the GCS or the LCS; the first departure angle is the expected sidelink departure angle between the first terminal and the second terminal; the first arrival angle is the expected sidelink arrival angle between the first terminal and the second terminal; the X axis in the GCS points toward a geographic north direction and the Z axis points toward a zenith direction.

An uncertainty range of the expected SL-AoD represents a value range of the expected SL-AoD; and/or an uncertainty range of the expected SL-ZoD represents a value range of the expected SL-ZoD; and/or an uncertainty range of the expected SL-AoA represents a value range of the expected SL-AoA; and/or an uncertainty range of the expected SL-ZoA represents a value range of the expected SL-ZoA.

In the embodiments of the present disclosure, an angle range of the sidelink departure angle or the sidelink arrival angle represented by the expected angle information and the uncertainty range information is as follows: [A-B/2, A+B/2]; wherein A represents an angle corresponding to the expected angle information; B represents an angle corresponding to the uncertainty range information.

In addition, the operation further includes: before sending the first information to the second device, using a first mode to determine the first information; wherein the first mode includes at least one of the followings: performing processing based on zone IDs of the first terminal and the second terminal; measuring a sidelink signal or channel; performing processing based on historical location information of the first terminal and the second terminal; or performing processing based on relative angle information between the first terminal and the second terminal obtained by ranging.

The performing the processing based on the zone IDs of the first terminal and the second terminal includes: receiving Physical Sidelink Control Channel (PSCCH) information sent by the second terminal; obtaining the zone ID of the second terminal based on the PSCCH information; determining the zone ID of the first terminal; performing processing based on the zone IDs of the first terminal and the second terminal.

In the embodiments of the present disclosure, the measuring a sidelink signal or channel includes at least one of the followings: measuring a Sidelink Synchronization Signal Block (S-SSB) sent by the second terminal; measuring a Physical Sidelink Shared Channel (PSSCH) sent by the second terminal; or measuring a Physical Sidelink Control Channel (PSCCH) sent by the second terminal.

In addition, the first information further includes at least one of the followings: first indication information, which is used to indicate an object generating the angle information; or second indication information, which is used to indicate a type of the angle information.

The object includes: the first terminal, the third terminal, the base station, the RSU or the positioning server; and/or the type includes: angle information in a Global Coordinate System (GCS), or angle information in a Local Coordinate System (LCS).

In the embodiments of the present disclosure, in the case that the type is the angle information in the LCS, the second indication information is further used to indicate conversion relationship information from the LCS to the GCS.

In addition, the first information further includes at least one of the followings: measurement confidence of the angle information; measurement quality indication information of the angle information; resolution of the angle information; or a mode for sending the angle information.

The measurement confidence refers to: the probability that an error value of the angle measurement corresponding to the angle information is in a confidence interval; the two endpoint values of the confidence interval are configured by the first device; and/or, the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or, the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or, the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

It should be noted here that the above-mentioned device provided by the embodiments of the present disclosure can implement all the method steps implemented by the above-mentioned method embodiments on the first device side, and can achieve the same technical effect. The parts and beneficial effects of the embodiments that are the same as the method embodiments will no longer be described in detail.

The embodiments of the present disclosure further provide an information transmission device, which is a second device, as shown in Fig. 11 (the second device is implemented as a terminal, such as a second terminal, etc.), including a memory 111, a transceiver 112, and a processor 113;

the memory 111 is configured to store a computer program; the transceiver 112 is configured to send and receive data under the control of the processor 113; the processor 113 is configured to read the computer program in the memory 111 and perform the following operations:

receiving first information sent by a first device through the transceiver 112;
wherein the first information includes: at least one of expected angle information or uncertainty range information of the expected angle information;
the expected angle information is angle information related to a sidelink departure angle and/or a sidelink arrival angle between a first terminal and a second terminal;
the first device includes: at least one of the first terminal, a third terminal, a base station, a Roadside Unit (RSU) or a positioning server;
the second device includes: at least one of the second terminal or a positioning calculation unit.

The information transmission device provided by the embodiment of the present disclosure involves receiving the first information sent by the first device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit. This device enables assisting the second device in determining the approximate angle range for searching the S-PRS, thereby assisting to improve a reception success rate of the S-PRS, avoiding a positioning deviation caused by failure to receive the S-PRS, thereby improving the positioning accuracy; it effectively solves the problem in the related art that a receiver cannot accurately receive the S-PRS.

Specifically, the transceiver 112 is configured to receive and send data under the control of the processor 113.

In Fig. 11, the bus architecture may include any number of interconnected buses and bridges, and connects various circuits including one or more processors represented by the processor 113 and the memory represented by the memory 111. The bus architecture can also link together various other circuits such as peripherals, voltage regulators, and power management circuits, which are all well known in the art and therefore will not be described further herein. The bus interface provides the interface. The transceiver 112 may be a plurality of elements, including a transmitter and a receiver, to allow for communication with various other apparatuses on the transmission medium. The transmission medium includes wireless channels, wired channels, optical cables, and other transmission media. For different user equipments, the user interface 114 can also be an interface capable of externally or internally connecting a required device. The connected device includes but is not limited to a keypad, a display, a speaker, a microphone, a joystick, etc.

The processor 113 is responsible for managing the bus architecture and general processing, and the memory 111 can store data used by the processor 113 when performing operations.

In some embodiments, the processor 113 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory, the processor is configured to perform any of the methods provided by the embodiments of the present disclosure according to the obtained executable instructions. The processor and the memory can also be physically separated.

It is noted that the second device may also be implemented as a network device (a network device such as a positioning calculation unit), and details may be referred to the relevant content of Fig. 10, which will not be repeated herein.

The expected angle information includes at least one of the followings: an expected Sidelink Azimuth angle of Departure (SL-AoD); an expected Sidelink Zenith angle of Departure (SL-ZoD); an expected Sidelink Azimuth angle of Arrival (SL-AoA); or an expected Sidelink Zenith angle of Arrival (SL-ZoA).

In the embodiments of the present disclosure, the expected SL-AoD is an expected value of the departure azimuth angle of the S-PRS; and/or, the expected SL-ZoD is an expected value of the departure vertical angle of the S-PRS; and/or, the expected SL-AoA is an expected value of the arrival azimuth angle of the S-PRS; and/or, the expected SL-ZoA is an expected value of the arrival vertical angle of the S-PRS.

The SL-AoD and the SL-AoA are represented as: azimuth angle information defined in a Global Coordinate System (GCS); or, azimuth angle information defined in a Local Coordinate System (LCS); and/or the SL-ZoD and the SL-ZoA are represented as: vertical angle information defined in the GCS; or, vertical angle information defined in the LCS.

In the embodiments of the present disclosure, the SL-ZoD is represented as an angle between a first departure angle and a Z axis of a first coordinate system; the SL-ZoA is represented as the angle between a first arrival angle and the Z axis of the first coordinate system; and/or the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system; wherein the first coordinate system is the GCS or the LCS; the first departure angle is the expected sidelink departure angle between the first terminal and the second terminal; the first arrival angle is the expected sidelink arrival angle between the first terminal and the second terminal; the X axis in the GCS points toward a geographic north direction and the Z axis points toward a zenith direction.

An uncertainty range of the expected SL-AoD represents a value range of the expected SL-AoD; and/or an uncertainty range of the expected SL-ZoD represents a value range of the expected SL-ZoD; and/or an uncertainty range of the expected SL-AoA represents a value range of the expected SL-AoA; and/or an uncertainty range of the expected SL-ZoA represents a value range of the expected SL-ZoA.

In the embodiments of the present disclosure, an angle range of the sidelink departure angle or the sidelink arrival angle represented by the expected angle information and the uncertainty range information is as follows: [A-B/2, A+B/2]; wherein A represents an angle corresponding to the expected angle information; B represents an angle corresponding to the uncertainty range information.

The first information is determined by the first device using a first mode; wherein the first mode includes at least one of the followings: performing processing based on zone IDs of the first terminal and the second terminal; measuring a sidelink signal or channel; performing processing based on historical location information of the first terminal and the second terminal; or performing processing based on relative angle information between the first terminal and the second terminal obtained by ranging.

In addition, the operation further includes: in the case that the first mode includes the performing the processing based on the zone IDs of the first terminal and the second terminal, before receiving the first device, sending Physical Sidelink Control Channel (PSCCH) information to the first device through the transceiver, wherein the PSCCH information carries the zone ID of the second terminal.

The measuring the sidelink signal or channel includes at least one of the followings: measuring a Sidelink Synchronization Signal Block (S-SSB) sent by the second terminal; measuring a Physical Sidelink Shared Channel (PSSCH) sent by the second terminal; or measuring a Physical Sidelink Control Channel (PSCCH) sent by the second terminal.

In addition, the first information further includes at least one of the followings: first indication information, which is used to indicate an object generating the angle information; or second indication information, which is used to indicate a type of the angle information.

The object includes: the first terminal, the third terminal, the base station, the RSU or the positioning server; and/or the type includes: angle information in a Global Coordinate System (GCS), or angle information in a Local Coordinate System (LCS).

In the embodiments of the present disclosure, in the case that the type is the angle information in the LCS, the second indication information is further used to indicate conversion relationship information from the LCS to the GCS.

In addition, the first information further includes at least one of the followings: measurement confidence of the angle information; measurement quality indication information of the angle information; a resolution of the angle information; or a mode for sending the angle information.

The measurement confidence refers to: the probability that an error value of the angle measurement corresponding to the angle information is in a confidence interval; the two endpoint values of the confidence interval are configured by the first device; and/or, the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or, the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or, the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

In addition, the operation further includes: after receiving the first information sent by the first device, determining the location information of the second terminal based on the first information.

It should be noted here that the above-mentioned device provided by the embodiments of the present disclosure can implement all the method steps implemented by the above-mentioned method embodiments on the second device side, and can achieve the same technical effect. The parts and beneficial effects of the embodiments that are the same as the method embodiments will no longer be described in detail.

The embodiments of the present disclosure further provide an information transmission apparatus, applied to a first device, as shown in Fig. 12, and includes:

a first sending unit 121, configured to send first information to a second device;
wherein the first information includes: at least one of expected angle information or uncertainty range information of the expected angle information;
the expected angle information is angle information related to a sidelink departure angle and/or a sidelink arrival angle between a first terminal and a second terminal;
the first device includes: at least one of the first terminal, a third terminal, a base station, a Roadside Unit (RSU) or a positioning server;
the second device includes: at least one of the second terminal or a positioning calculation unit.

The information transmission apparatus provided by the embodiments of the present disclosure involves sending first information to a second device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit. This apparatus enables assisting the second device in determining the approximate angle range for searching the S-PRS, thereby assisting to improve a reception success rate of the S-PRS, avoiding a positioning deviation caused by failure to receive the S-PRS, thereby improving the positioning accuracy; it effectively solves the problem in the related art that a receiver cannot accurately receive the S-PRS.

The expected angle information includes at least one of the followings: an expected Sidelink Azimuth angle of Departure (SL-AoD); an expected Sidelink Zenith angle of Departure (SL-ZoD); an expected Sidelink Azimuth angle of Arrival (SL-AoA); or an expected Sidelink Zenith angle of Arrival (SL-ZoA).

In the embodiments of the present disclosure, the expected SL-AoD is an expected value of the departure azimuth angle of the S-PRS; and/or, the expected SL-ZoD is an expected value of the departure vertical angle of the S-PRS; and/or, the expected SL-AoA is an expected value of the arrival azimuth angle of the S-PRS; and/or, the expected SL-ZoA is an expected value of the arrival vertical angle of the S-PRS.

The SL-AoD and the SL-AoA are represented as: azimuth angle information defined in a Global Coordinate System (GCS); or, azimuth angle information defined in a Local Coordinate System (LCS); and/or the SL-ZoD and the SL-ZoA are represented as: vertical angle information defined in the GCS; or, vertical angle information defined in the LCS.

In the embodiments of the present disclosure, the SL-ZoD is represented as an angle between a first departure angle and a Z axis of a first coordinate system; the SL-ZoA is represented as the angle between a first arrival angle and the Z axis of the first coordinate system; and/or the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system; wherein the first coordinate system is the GCS or the LCS; the first departure angle is the expected sidelink departure angle between the first terminal and the second terminal; the first arrival angle is the expected sidelink arrival angle between the first terminal and the second terminal; the X axis in the GCS points toward a geographic north direction and the Z axis points toward a zenith direction.

An uncertainty range of the expected SL-AoD represents a value range of the expected SL-AoD; and/or an uncertainty range of the expected SL-ZoD represents a value range of the expected SL-ZoD; and/or an uncertainty range of the expected SL-AoA represents a value range of the expected SL-AoA; and/or an uncertainty range of the expected SL-ZoA represents a value range of the expected SL-ZoA.

In the embodiments of the present disclosure, an angle range of the sidelink departure angle or the sidelink arrival angle represented by the expected angle information and the uncertainty range information is as follows: [A-B/2, A+B/2]; wherein A represents an angle corresponding to the expected angle information; B represents an angle corresponding to the uncertainty range information.

In addition, the information transmission apparatus further includes: a first determination unit, configured to determine the first information using a first mode before sending the first information to the second device; wherein the first mode includes at least one of the followings: performing processing based on zone IDs of the first terminal and the second terminal; measuring a sidelink signal or channel; performing processing based on historical location information of the first terminal and the second terminal; or performing processing based on relative angle information between the first terminal and the second terminal obtained by ranging.

The performing processing based on the zone IDs of the first terminal and the second terminal includes: receiving Physical Sidelink Control Channel (PSCCH) information sent by the second terminal; obtaining the zone ID of the second terminal based on the PSCCH information; determining the zone ID of the first terminal; performing processing based on the zone IDs of the first terminal and the second terminal.

In the embodiments of the present disclosure, the measuring a sidelink signal or channel includes at least one of the followings: measuring a Sidelink Synchronization Signal Block (S-SSB) sent by the second terminal; measuring a Physical Sidelink Shared Channel (PSSCH) sent by the second terminal; or measuring a Physical Sidelink Control Channel (PSCCH) sent by the second terminal.

In addition, the first information further includes at least one of the followings: first indication information, which is used to indicate an object generating the angle information; or second indication information, which is used to indicate a type of the angle information.

The object includes: the first terminal, the third terminal, the base station, the RSU or the positioning server; and/or the type includes: angle information in a Global Coordinate System (GCS), or angle information in a Local Coordinate System (LCS).

In the embodiments of the present disclosure, in the case that the type is the angle information in the LCS, the second indication information is further used to indicate conversion relationship information from the LCS to the GCS.

In addition, the first information further includes at least one of the followings: measurement confidence of the angle information; measurement quality indication information of the angle information; a resolution of the angle information; or a mode for sending the angle information.

The measurement confidence refers to: the probability that an error value of the angle measurement corresponding to the angle information is in a confidence interval; the two endpoint values of the confidence interval are configured by the first device; and/or, the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or, the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or, the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

It should be noted here that the above-mentioned apparatus provided by the embodiments of the present disclosure can implement all the method steps implemented by the above-mentioned method embodiments on the first device side, and can achieve the same technical effect. The parts and beneficial effects of the embodiments that are the same as the method embodiments will no longer be described in detail.

The embodiments of the present disclosure further provide an information transmission apparatus, applied to a second device, as shown in Fig. 13, and includes:

a first receiving unit 131, configured to receive the first information sent by the first device;
wherein the first information includes: at least one of expected angle information or uncertainty range information of the expected angle information;
the expected angle information is angle information related to a sidelink departure angle and/or a sidelink arrival angle between a first terminal and a second terminal;
the first device includes: at least one of the first terminal, a third terminal, a base station, a Roadside Unit (RSU) or a positioning server;
the second device includes: at least one of the second terminal or a positioning calculation unit.

The information transmission apparatus provided by the embodiments of the present disclosure involves receiving the first information sent by the first device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit. This apparatus enables assisting the second device in determining the approximate angle range for searching the S-PRS, thereby assisting to improve a reception success rate of the S-PRS, avoiding a positioning deviation caused by failure to receive the S-PRS, thereby improving the positioning accuracy; it effectively solves the problem in the related art that a receiver cannot accurately receive the S-PRS.

The expected angle information includes at least one of the followings: an expected Sidelink Azimuth angle of Departure (SL-AoD); an expected Sidelink Zenith angle of Departure (SL-ZoD); an expected Sidelink Azimuth angle of Arrival (SL-AoA); or an expected Sidelink Zenith angle of Arrival (SL-ZoA).

In the embodiments of the present disclosure, the expected SL-AoD is an expected value of the departure azimuth angle of the S-PRS; and/or, the expected SL-ZoD is an expected value of the departure vertical angle of the S-PRS; and/or, the expected SL-AoA is an expected value of the arrival azimuth angle of the S-PRS;

and/or, the expected SL-ZoA is an expected value of the arrival vertical angle of the S-PRS.

The SL-AoD and the SL-AoA are represented as: azimuth angle information defined in a Global Coordinate System (GCS); or, azimuth angle information defined in a Local Coordinate System (LCS); and/or the SL-ZoD and the SL-ZoA are represented as: vertical angle information defined in the GCS; or, vertical angle information defined in the LCS.

In the embodiments of the present disclosure, the SL-ZoD is represented as an angle between a first departure angle and a Z axis of a first coordinate system; the SL-ZoA is represented as the angle between a first arrival angle and the Z axis of the first coordinate system; and/or the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system; wherein the first coordinate system is the GCS or the LCS; the first departure angle is the expected sidelink departure angle between the first terminal and the second terminal; the first arrival angle is the expected sidelink arrival angle between the first terminal and the second terminal; the X axis in the GCS points toward a geographic north direction and the Z axis points toward a zenith direction.

An uncertainty range of the expected SL-AoD represents a value range of the expected SL-AoD; and/or an uncertainty range of the expected SL-ZoD represents a value range of the expected SL-ZoD; and/or an uncertainty range of the expected SL-AoA represents a value range of the expected SL-AoA; and/or an uncertainty range of the expected SL-ZoA represents a value range of the expected SL-ZoA.

In the embodiments of the present disclosure, an angle range of the sidelink departure angle or the sidelink arrival angle represented by the expected angle information and the uncertainty range information is as follows: [A-B/2, A+B/2]; wherein A represents an angle corresponding to the expected angle information; B represents an angle corresponding to the uncertainty range information.

The first information is determined by the first device using a first mode; wherein the first mode includes at least one of the followings: performing processing based on zone IDs of the first terminal and the second terminal; measuring a sidelink signal or channel; performing processing based on historical location information of the first terminal and the second terminal; or performing processing based on relative angle information between the first terminal and the second terminal obtained by ranging.

In addition, the information transmission apparatus further includes: a second sending unit, configured to send Physical Sidelink Control Channel (PSCCH) information to the first device before receiving the first device in the case that the first mode includes the performing the processing based on the zone IDs of the first terminal and the second terminal; wherein the PSCCH information carries the zone ID of the second terminal.

The measuring a sidelink signal or channel includes at least one of the followings: measuring a Sidelink Synchronization Signal Block (S-SSB) sent by the second terminal; measuring a Physical Sidelink Shared Channel (PSSCH) sent by the second terminal; or measuring a Physical Sidelink Control Channel (PSCCH) sent by the second terminal.

In addition, the first information further includes at least one of the followings: first indication information, which is used to indicate an object generating the angle information; or second indication information, which is used to indicate a type of the angle information.

The object includes: the first terminal, the third terminal, the base station, the RSU or the positioning server; and/or the type includes: angle information in a Global Coordinate System (GCS), or angle information in a Local Coordinate System (LCS).

In the embodiments of the present disclosure, in the case that the type is the angle information in the LCS, the second indication information is further used to indicate conversion relationship information from the LCS to the GCS.

In addition, the first information further includes at least one of the followings: measurement confidence of the angle information; measurement quality indication information of the angle information; a resolution of the angle information; or a mode for sending the angle information.

The measurement confidence refers to: the probability that an error value of the angle measurement corresponding to the angle information is in a confidence interval; the two endpoint values of the confidence interval are configured by the first device; and/or, the measurement quality indication information includes: at least one of the error value, an error resolution and the number of error sampling points; the error value refers to the optimal estimate of the uncertainty of the angle measurement; the error resolution refers to the quantization step size of the indication domain where the error value is located; the number of error sampling points refers to the number of angle measurements used when calculating the error value; and/or, the resolution $R=2^k$, where k is configured based on at least one of carrier operating frequency, a carrier bandwidth, Sub-Carrier Spacing (SCS), in-coverage or out-of-coverage or partial coverage, indoor or outdoor, a moving speed range, a positioning priority, or a positioning accuracy requirement; and/or, the sending mode includes: at least one of sending occasion or a sending path; the sending occasion includes: at least one of periodic sending occasion or event-triggered sending occasion; and/or, the sending path includes: at least one of sending through an LTE Positioning Protocol (LPP) signaling, sending through a PC5-RRC (sidelink Radio Resource Control) signaling, or sending through an RRC (Radio Resource Control) signaling.

In addition, the information transmission apparatus further includes: a second determination unit, configured to determine the location information of the second terminal based on the first information after receiving the first information sent by the first device.

It should be noted here that the above-mentioned apparatus provided by the embodiments of the present disclosure can implement all the method steps implemented by the above-mentioned method embodiments on the second device side, and can achieve the same technical effect. The parts and beneficial effects of the embodiments that are the same as the method embodiments will no longer be described in detail.

It should be noted that the division of units in the embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, or the entirety or parts of the technical solution of the present disclosure may be implemented in a form of a software product. The computer software product is stored in a storage medium, and includes instructions to cause a computer device (which can be a personal computer, a server, or a network device, etc.) or a processor to execute all or part of the steps of the methods described in various embodiments of the present disclosure. The aforementioned storage media include: USB flash disk, removable hard disk, Read-Only Memory (ROM), Random Access Memory (RAM), magnetic disk or optical disc and other media that can store program code.

The present disclosure further provides in some embodiments a processor-readable storage medium. The processor-readable storage medium stores a computer program. The computer program is used to cause the processor to execute the above-mentioned information transmission method on the first device side or the second device side.

The processor-readable storage medium may be any available media or data storage device that the processor can access, including but not limited to magnetic storage (such as floppy disks, hard disks, magnetic tapes, Magneto-Optical disks (MO)), optical storage (such as Compact Disc (CD), Digital Versatile Disc (DVD), Blu-ray Disc (BD), High-definition Versatile Disc (HVD)), and semiconductor memories (such as Read-Only Memory (ROM), Erasable Programmable ROM (EPROM), Electrically Erasable Programmable ROM (EEPROM), nonvolatile memory (NAND FLASH), Solid State Disk or Solid State Drive (SSD)), etc.

The implementation embodiments of the information transmission method on the first device side or the second device side are all applicable to the embodiments of the processor-readable storage medium, and can also achieve the same technical effect.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. In addition, the present disclosure may take the form of a computer program product embodied on one or more computer-usable storage media (including, but not limited to, magnetic disk storage, optical storage, and the like) including computer-usable program codes.

The present disclosure has been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process, such that the instructions which are executed on the computer or other programmable device provide steps for implementing the functions specified in the flow diagram flow or flows and/or block diagram block or blocks.

Obviously, those skilled in the art can make various modifications and variations to the present disclosure without departing from the spirit and scope of the disclosure. In this way, if these modifications and variations of the present disclosure fall within the scope of the claims of the present disclosure and equivalent thereof, the present disclosure is also intended to include these modifications and variations.

## Claims

1. An information transmission method, applied to a first device, comprising:

   sending first information to a second device;
   wherein the first information comprises: at least one of expected angle information or uncertainty range information of the expected angle information;
   the expected angle information is angle information related to a sidelink departure angle and/or a sidelink arrival angle between a first terminal and a second terminal;
   the first device comprises: at least one of the first terminal, a third terminal, a base station, a Roadside Unit (RSU) or a positioning server;
   the second device comprises: at least one of the second terminal or a positioning calculation unit.

2. The information transmission method according to claim 1, wherein the expected angle information comprises at least one of the followings:

   an expected Sidelink Azimuth angle of Departure (SL-AoD);
   an expected Sidelink Zenith angle of Departure (SL-ZoD);
   an expected Sidelink Azimuth angle of Arrival (SL-AoA); or
   an expected Sidelink Zenith angle of Arrival (SL-ZoA).

3. The information transmission method according to claim 2, wherein the SL-AoD and the SL-AoA are represented as: azimuth angle information defined in a Global Coordinate System (GCS); or, azimuth angle information defined in a Local Coordinate System (LCS); and/or
   the SL-ZoD and the SL-ZoA are represented as: vertical angle information defined in the GCS; or, vertical angle information defined in the LCS.

4. The information transmission method according to claim 3, wherein the SL-ZoD is represented as an angle between a first departure angle and a Z axis of a first coordinate system; the SL-ZoA is represented as the angle between a first arrival angle and the Z axis of the first coordinate system; and/or

the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;
wherein the first coordinate system is the GCS or the LCS;
the first departure angle is the expected sidelink departure angle between the first terminal and the second terminal;
the first arrival angle is the expected sidelink arrival angle between the first terminal and the second terminal;
the X axis in the GCS points toward a geographic north direction and the Z axis points toward a zenith direction.

5. The information transmission method according to claim 2, wherein an uncertainty range of the expected SL-AoD represents a value range of the expected SL-AoD; and/or

an uncertainty range of the expected SL-ZoD represents a value range of the expected SL-ZoD; and/or
an uncertainty range of the expected SL-AoA represents a value range of the expected SL-AoA; and/or
an uncertainty range of the expected SL-ZoA represents a value range of the expected SL-ZoA.

6. The information transmission method according to claim 1 or 2, wherein an angle range of the sidelink departure angle or the sidelink arrival angle represented by the expected angle information and the uncertainty range information is as follows:

$$[A-B/2, A+B/2];$$

wherein A represents an angle corresponding to the expected angle information; B represents an angle corresponding to the uncertainty range information.

7. The information transmission method according to claim 1, wherein before sending the first information to the second device, the method further comprises:

determining the first information using a first mode;
wherein the first mode comprises at least one of the followings:

performing processing based on zone IDs of the first terminal and the second terminal;
measuring a sidelink signal or channel;
performing processing based on historical location information of the first terminal and the second terminal; or
performing processing based on relative angle information between the first terminal and the second terminal obtained by ranging.

8. The information transmission method according to claim 7, wherein the performing processing based on the zone IDs of the first terminal and the second terminal comprises:

receiving Physical Sidelink Control Channel (PSCCH) information sent by the second terminal;
obtaining the zone ID of the second terminal based on the PSCCH information;
determining the zone ID of the first terminal;
performing processing based on the zone IDs of the first terminal and the second terminal.

9. The information transmission method according to claim 1, wherein the first information further comprises at least one of the followings:

first indication information, which is used to indicate an object generating the angle information; or
second indication information, which is used to indicate a type of the angle information.

10. The information transmission method according to claim 9, wherein the object comprises: the first terminal, the third terminal, the base station, the RSU or the positioning server; and/or
the type comprises: angle information in a Global Coordinate System (GCS), or angle information in a Local Coordinate System (LCS).

11. The information transmission method according to claim 10, wherein in the case that the type is the angle information in the LCS, the second indication information is further used to indicate conversion relationship information from the LCS to the GCS.

12. The information transmission method according to claim 1, wherein the first information further comprises at least one of the followings:

measurement confidence of the angle information;
measurement quality indication information of the angle information;
a resolution of the angle information; or
a mode for sending the angle information.

13. An information transmission method, applied to a second device, comprising:

receiving first information sent by a first device; wherein the first information comprises: at least one of expected angle information or uncertainty range information of the expected angle information;
the expected angle information is angle information related to a sidelink departure angle and/or a sidelink arrival angle between a first terminal and a second terminal;
the first device comprises: at least one of the first terminal, a third terminal, a base station, a Roadside Unit (RSU) or a positioning server;
the second device comprises: at least one of the second terminal or a positioning calculation unit.

14. The information transmission method according to claim 13, wherein the expected angle information comprises at least one of the followings:

an expected Sidelink Azimuth angle of Departure (SL-AoD);
an expected Sidelink Zenith angle of Departure (SL-ZoD);
an expected Sidelink Azimuth angle of Arrival (SL-AoA); or
an expected Sidelink Zenith angle of Arrival (SL-ZoA).

15. The information transmission method according to claim 14, wherein the SL-AoD and the SL-AoA are represented as: azimuth angle information defined in a Global Coordinate System (GCS); or, azimuth angle information defined in a Local Coordinate System (LCS); and/or
the SL-ZoD and the SL-ZoA are represented as: vertical angle information defined in the GCS; or, vertical angle information defined in the LCS.

16. The information transmission method according to claim 15, wherein the SL-ZoD is represented as an angle between a first departure angle and a Z axis of a first coordinate system; the SL-ZoA is represented as the angle between a first arrival angle and the Z axis of the first coordinate system; and/or

the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;
wherein the first coordinate system is the GCS or the LCS;
the first departure angle is the expected sidelink departure angle between the first terminal and the second terminal;
the first arrival angle is the expected sidelink arrival angle between the first terminal and the second terminal;
the X axis in the GCS points toward a geographic north direction and the Z axis points toward a zenith direction.

17. The information transmission method according to claim 14, wherein an uncertainty range of the expected SL-AoD represents a value range of the expected SL-AoD; and/or

an uncertainty range of the expected SL-ZoD represents a value range of the expected SL-ZoD; and/or
an uncertainty range of the expected SL-AoA represents a value range of the expected SL-AoA; and/or
an uncertainty range of the expected SL-ZoA represents a value range of the expected SL-ZoA.

18. The information transmission method according to claim 13 or 14, wherein an angle range of the sidelink departure angle or the sidelink arrival angle represented by the expected angle information and the uncertainty range information is as follows:

$$[A-B/2, A+B/2];$$

wherein A represents an angle corresponding to the expected angle information; B represents an angle corresponding to the uncertainty range information.

19. The information transmission method according to claim 13, wherein the first information is determined by the first device using a first mode;
wherein the first mode comprises at least one of the followings:

performing processing based on zone IDs of the first terminal and the second terminal;
measuring a sidelink signal or channel;

performing processing based on historical location information of the first terminal and the second terminal; or
performing processing based on relative angle information between the first terminal and the second terminal obtained by ranging.

20. The information transmission method according to claim 19, wherein in the case that the first mode comprises the performing processing based on the zone IDs of the first terminal and the second terminal, before receiving the first device, the method further comprises:
sending Physical Sidelink Control Channel (PSCCH) information to the first device, wherein the PSCCH information carries the zone ID of the second terminal.

21. The information transmission method according to claim 13, wherein the first information further comprises at least one of the followings:

first indication information, which is used to indicate an object generating the angle information; or
second indication information, which is used to indicate a type of the angle information.

22. The information transmission method according to claim 21, wherein the object comprises: the first terminal, the third terminal, the base station, the RSU or the positioning server; and/or
the type comprises: angle information in a Global Coordinate System (GCS), or angle information in a Local Coordinate System (LCS).

23. The information transmission method according to claim 22, wherein in the case that the type is the angle information in the LCS, the second indication information is further used to indicate conversion relationship information from the LCS to the GCS.

24. The information transmission method according to claim 13, wherein the first information further comprises at least one of the followings:

measurement confidence of the angle information;
measurement quality indication information of the angle information;
a resolution of the angle information; or
a mode for sending the angle information.

25. An information transmission device, wherein the information transmission device is a first device, and comprises a memory, a transceiver, and a processor; wherein the memory is configured to store a computer program; the transceiver is configured to send and receive data under the control of the processor; the processor is configured to read the computer program in the memory and perform the following operations:

sending first information to a second device through the transceiver;
wherein the first information comprises: at least one of expected angle information or uncertainty range information of the expected angle information;
the expected angle information is: angle information related to a sidelink departure angle and/or a sidelink arrival angle between a first terminal and a second terminal;
the first device comprises: at least one of the first terminal, a third terminal, a base station, a Roadside Unit (RSU) or a positioning server;
the second device comprises: at least one of the second terminal or a positioning calculation unit.

26. The information transmission device according to claim 25, wherein the expected angle information comprises at least one of the followings:

an expected Sidelink Azimuth angle of Departure (SL-AoD);
an expected Sidelink Zenith angle of Departure (SL-ZoD);
an expected Sidelink Azimuth angle of Arrival (SL-AoA); or
an expected Sidelink Zenith angle of Arrival (SL-ZoA).

27. The information transmission device according to claim 26, wherein the SL-AoD and the SL-AoA are represented as: azimuth angle information defined in a Global Coordinate System (GCS); or, azimuth angle information defined in a Local Coordinate System (LCS); and/or
the SL-ZoD and the SL-ZoA are represented as: vertical angle information defined in the GCS; or, vertical angle information defined in the LCS.

28. The information transmission device according to claim 27, wherein the SL-ZoD is represented as an angle between a first departure angle and a Z axis of a first coordinate system; the SL-ZoA is represented as the angle between a first arrival angle and the Z axis of the first coordinate system; and/or

the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;

wherein the first coordinate system is the GCS or the LCS;

the first departure angle is: the expected sidelink departure angle between the first terminal and the second terminal;

the first arrival angle is: the expected sidelink arrival angle between the first terminal and the second terminal;

the X axis in the GCS points toward a geographic north direction and the Z axis points toward a zenith direction.

29. The information transmission device according to claim 26, wherein an uncertainty range of the expected SL-AoD represents a value range of the expected SL-AoD; and/or

an uncertainty range of the expected SL-ZoD represents a value range of the expected SL-ZoD; and/or
an uncertainty range of the expected SL-AoA represents a value range of the expected SL-AoA; and/or
an uncertainty range of the expected SL-ZoA represents a value range of the expected SL-ZoA.

30. The information transmission device according to claim 25 or 26, wherein an angle range of the sidelink departure angle or the sidelink arrival angle represented by the expected angle information and the uncertainty range information is as follows:

$$[A-B/2, A+B/2];$$

wherein A represents an angle corresponding to the expected angle information; B represents an angle corresponding to the uncertainty range information.

31. The information transmission device according to claim 25, wherein the operation further comprises:

before sending the first information to the second device, determining the first information using a first mode;
wherein the first mode comprises at least one of the followings:

performing processing based on zone IDs of the first terminal and the second terminal;
measuring a sidelink signal or channel;
performing processing based on historical location information of the first terminal and the second terminal; or
performing processing based on relative angle information between the first terminal and the second terminal obtained by ranging.

32. The information transmission device according to claim 31, wherein the performing processing based on the zone IDs of the first terminal and the second terminal comprises:

receiving Physical Sidelink Control Channel (PSCCH) information sent by the second terminal;
obtaining the zone ID of the second terminal based on the PSCCH information;
determining the zone ID of the first terminal;
performing processing based on the zone IDs of the first terminal and the second terminal.

33. The information transmission device according to claim 25, wherein the first information further comprises at least one of the followings:

first indication information, which is used to indicate an object generating the angle information; or
second indication information, which is used to indicate a type of the angle information.

34. The information transmission device according to claim 33, wherein the object comprises: the first terminal, the third terminal, the base station, the RSU or the positioning server; and/or
the type comprises: angle information in a Global Coordinate System (GCS), or angle information in a Local Coordinate System (LCS).

35. The information transmission device according to claim 34, wherein in the case that the type is the angle information in the LCS, the second indication information is further used to indicate conversion relationship information from the LCS to the GCS.

36. The information transmission device according to claim 25, wherein the first information further comprises at least one of the followings:

measurement confidence of the angle information;
measurement quality indication information of the angle information;
a resolution of the angle information; or
a mode for sending the angle information.

37. An information transmission device, wherein the information transmission device is a second device, and comprises a memory, a transceiver, and a processor;

wherein the memory is configured to store a computer program; the transceiver is configured to send and receive data under the control of the processor; the processor is configured to read the computer program in the memory and perform the following operations:

> receiving, through the transceiver, first information sent by a first device;
> wherein the first information comprises: at least one of expected angle information or uncertainty range information of the expected angle information;
> the expected angle information is angle information related to a sidelink departure angle and/or a sidelink arrival angle between a first terminal and a second terminal;
> the first device comprises: at least one of the first terminal, a third terminal, a base station, a Roadside Unit (RSU) or a positioning server;
> the second device comprises: at least one of the second terminal or a positioning calculation unit.

38. The information transmission device according to claim 37, wherein the expected angle information comprises at least one of the followings:

> an expected Sidelink Azimuth angle of Departure (SL-AoD);
> an expected Sidelink Zenith angle of Departure (SL-ZoD);
> an expected Sidelink Azimuth angle of Arrival (SL-AoA); or
> an expected Sidelink Zenith angle of Arrival (SL-ZoA).

39. The information transmission device according to claim 38, wherein the SL-AoD and the SL-AoA are represented as: azimuth angle information defined in a Global Coordinate System (GCS); or, azimuth angle information defined in a Local Coordinate System (LCS); and/or the SL-ZoD and the SL-ZoA are represented as: vertical angle information defined in the GCS; or, vertical angle information defined in the LCS.

40. The information transmission device according to claim 39, wherein the SL-ZoD is represented as an angle between a first departure angle and a Z axis of a first coordinate system; the SL-ZoA is represented as the angle between a first arrival angle and the Z axis of the first coordinate system; and/or

> the SL-AoD is represented as an angle between a projection direction obtained after a first departure angle is projected onto a plane formed by an X axis and a Y axis of a first coordinate system and the X axis of the first coordinate system; the SL-AoA is represented as the angle between the projection direction obtained after a first arrival angle is projected onto the plane formed by the X axis and the Y axis of the first coordinate system and the X axis of the first coordinate system;
> wherein the first coordinate system is the GCS or the LCS;
> the first departure angle is: the expected sidelink departure angle between the first terminal and the second terminal;
> the first arrival angle is: the expected sidelink arrival angle between the first terminal and the second terminal;
> the X axis in the GCS points toward a geographic north direction and the Z axis points toward a zenith direction.

41. The information transmission device according to claim 38, wherein an uncertainty range of the expected SL-AoD represents a value range of the expected SL-AoD; and/or

> an uncertainty range of the expected SL-ZoD represents a value range of the expected SL-ZoD; and/or
> an uncertainty range of the expected SL-AoA represents a value range of the expected SL-AoA; and/or
> an uncertainty range of the expected SL-ZoA represents a value range of the expected SL-ZoA.

42. The information transmission device according to claim 37 or 38, an angle range of the sidelink departure angle or the sidelink arrival angle represented by the expected angle information and the uncertainty range information is as follows:

$$[A-B/2, A+B/2];$$

wherein A represents an angle corresponding to the expected angle information; B represents an angle corresponding to the uncertainty range information.

43. The information transmission device according to claim 37, wherein the first information is determined by the first device using a first mode; wherein the first mode comprises at least one of the followings:

> performing processing based on zone IDs of the first terminal and the second terminal;
> measuring a sidelink signal or channel;

performing processing based on historical location information of the first terminal and the second terminal; or

performing processing based on relative angle information between the first terminal and the second terminal obtained by ranging.

44. The information transmission device according to claim 43, wherein the operation further comprises: in the case that the first mode comprises the performing processing based on the zone IDs of the first terminal and the second terminal, before receiving the first device, sending Physical Sidelink Control Channel (PSCCH) information to the first device through the transceiver, wherein the PSCCH information carries the zone ID of the second terminal.

45. The information transmission device according to claim 37, wherein the first information further comprises at least one of the followings:

first indication information, which is used to indicate an object generating the angle information; or

second indication information, which is used to indicate a type of the angle information.

46. The information transmission device according to claim 45, wherein the object comprises: the first terminal, the third terminal, the base station, the RSU or the positioning server; and/or

the type comprises: angle information in a Global Coordinate System (GCS), or angle information in a Local Coordinate System (LCS).

47. The information transmission device according to claim 46, wherein in the case that the type is the angle information in the LCS, the second indication information is further used to indicate conversion relationship information from the LCS to the GCS.

48. The information transmission device according to claim 37, wherein the first information further comprises at least one of the followings:

measurement confidence of the angle information;

measurement quality indication information of the angle information;

a resolution of the angle information; or

a mode for sending the angle information.

49. An information transmission apparatus, applied to a first device, comprising:

a first sending unit, configured to send first information to a second device;

wherein the first information comprises: at least one of expected angle information or uncertainty range information of the expected angle information;

the expected angle information is: angle information related to a sidelink departure angle and/or a sidelink arrival angle between a first terminal and a second terminal;

the first device comprises: at least one of the first terminal, a third terminal, a base station, a Roadside Unit (RSU) or a positioning server;

the second device comprises: at least one of the second terminal or a positioning calculation unit.

50. An information transmission apparatus, applied to a second device, comprising:

a first receiving unit, configured to receive first information sent by a first device;

wherein the first information comprises: at least one of expected angle information or uncertainty range information of the expected angle information;

the expected angle information is angle information related to a sidelink departure angle and/or a sidelink arrival angle between a first terminal and a second terminal;

the first device comprises: at least one of the first terminal, a third terminal, a base station, a Roadside Unit (RSU) or a positioning server;

the second device comprises: at least one of the second terminal or a positioning calculation unit.

51. A processor-readable storage medium storing a computer program, wherein the computer program is used to cause a processor to execute the information transmission method according to any one of claims 1 to 24.

```
      ┌─────────────┐
      │   network   │
      │   device    │
      └─────────────┘
       ↗           ↘
┌─────────────┐   ┌─────────────┐
│  terminal   │←→│  terminal   │
│   device    │   │   device    │
└─────────────┘   └─────────────┘
```

**Fig 1**

```
                    ┌───────┐
                    │  LMF  │
                    └───────┘
        ⇗                        ⇖
┌──────────┐                      ┌──────────┐
│   base   │                      │   base   │
│ station 1│                      │ station 2│
└──────────┘                      └──────────┘

┌──────────┐                      ┌──────────┐
│   base   │   DL-PRS    DL-PRS   │   base   │
│ station 3│                      │ station 4│
└──────────┘                      └──────────┘

       DL-PRS                DL-PRS
           ┌────────────┐
           │  terminal  │
           └────────────┘
```

**Fig. 2**

sending first information to a second device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit

31

**Fig. 3**

receiving first information sent by a first device; wherein the first information includes: at least one of expected angle information or uncertainty range information of the expected angle information; the expected angle information is angle information related to a sidelink departure angle and/or a sidelink arrival angle between a first terminal and a second terminal; the first device includes: at least one of the first terminal, a third terminal, a base station, a Roadside Unit (RSU) or a positioning server; the second device includes: at least one of the second terminal or a positioning calculation unit

41

**Fig. 4**

reflector

a

S-PRS2

$\theta > \theta_{max}/2$

b

terminal B

$\theta_{max}$

S-PRS1

terminal A

**Fig. 5**

Fig. 6

Fig. 7

**Fig. 8**

Z' axis (LCS)

Z axis (GCS)

expected sidelink departure angle between the terminal A and the terminal B

$\vartheta_2$

Y' axis (LCS)

Y axis (GCS)

(0,0)

$\varphi_2$

X axis (GCS)

X' axis (LCS)

projection direction obtained after the expected sidelink departure angle between the terminal A and the terminal B is projected onto the X'Y' plane

Fig. 9

processor 103

memory 101

bus interface

transceiver 102

Fig. 10

processor — 113

bus interface

memory — 111

transceiver — 112

user interface — 114

Fig. 11

first sending unit — 121

Fig. 12

first receiving unit — 131

Fig. 13

## INTERNATIONAL SEARCH REPORT

| International application No. |
| --- |
| **PCT/CN2023/110222** |

### A. CLASSIFICATION OF SUBJECT MATTER

H04W 4/02(2018.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, CNKI, 3GPP: 期望, 预期, 角度, 垂直, 方位, 不确定, 侧链, 侧行, 离开角, 到达角, 范围, 旁链, 直通, AOA, AOD, sidelink, SL, PRS, ZOA, ZOD, expect, range

### C. DOCUMENTS CONSIDERED TO BE RELEVANT

| Category* | Citation of document, with indication, where appropriate, of the relevant passages | Relevant to claim No. |
| --- | --- | --- |
| PX | CN 115696562 A (VIVO MOBILE COMMUNICATION CO., LTD.) 03 February 2023 (2023-02-03) <br> description, paragraphs [0037]-[0774] | 1-51 |
| X | WO 2022031974 A1 (IDAC HOLDINGS, INC.) 10 February 2022 (2022-02-10) <br> description, paragraphs [0016]-[0340] | 1-51 |
| X | WO 2022066380 A1 (QUALCOMM INC.) 31 March 2022 (2022-03-31) <br> description, paragraphs [0023]-[0222] | 1-51 |
| A | US 2019166453 A1 (QUALCOMM INC.) 30 May 2019 (2019-05-30) <br> entire document | 1-51 |
| A | WO 2022081630 A1 (IDAC HOLDINGS, INC.) 21 April 2022 (2022-04-21) <br> entire document | 1-51 |

☐ Further documents are listed in the continuation of Box C.　　☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **17 October 2023** | **21 October 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110222**

| Patent document cited in search report | | | Publication date (day/month/year) | Patent family member(s) | | | Publication date (day/month/year) |
|---|---|---|---|---|---|---|---|
| CN | 115696562 | A | 03 February 2023 | WO | 2023005836 | A1 | 02 February 2023 |
| WO | 2022031974 | A1 | 10 February 2022 | EP | 4193556 | A1 | 14 June 2023 |
| | | | | KR | 20230061383 | A | 08 May 2023 |
| | | | | BR | 112023002049 | A2 | 18 April 2023 |
| WO | 2022066380 | A1 | 31 March 2022 | KR | 20230078643 | A | 02 June 2023 |
| | | | | EP | 4218315 | A1 | 02 August 2023 |
| | | | | TW | 202215803 | A | 16 April 2022 |
| | | | | BR | 112023004305 | A2 | 04 April 2023 |
| | | | | US | 2023176163 | A1 | 08 June 2023 |
| US | 2019166453 | A1 | 30 May 2019 | US | 10567905 | B2 | 18 February 2020 |
| | | | | WO | 2019103804 | A1 | 31 May 2019 |
| WO | 2022081630 | A1 | 21 April 2022 | EP | 4229431 | A1 | 23 August 2023 |
| | | | | TW | 202222086 | A | 01 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210918392